# EUROPEAN PATENT APPLICATION

(11) **EP 4 793 699 A1**
(43) Date of publication of application: **19.08.2026**
(21) Application number: 24877462.2
(22) Date of filing: 04.10.2024
(51) Int. Cl.: G03B 3/10, G03B 13/36, G03B 5/06, G03B 17/12, H04N 23/54, H04N 23/55, G02B 27/64, H02K 41/035

(54) **LENS DRIVING DEVICE, CAMERA DEVICE, AND OPTICAL INSTRUMENT**

(30) Priority: 10.10.2023 KR 20230134697; 10.10.2023 KR 20230134698; 10.10.2023 KR 20230134699
(71) Applicant: LG Innotek Co., Ltd., Seoul 07796 (KR)
(72) Inventor: KWON, Tae Hoon, Seoul 07796 (KR); NOH, Yun Ho, Seoul 07796 (KR); JANG, Hyeon Jun, Seoul 07796 (KR); KIM, Young Ho, Seoul 07796 (KR)
(74) Representative: DREISS Patentanwälte PartG mbB
(86) International application number: PCT/KR2024/015075
(87) International publication number: WO 2025/079924

(57) **Abstract**

The present embodiment relates to a lens driving device comprising: a base; an AF carrier being disposed on the base; an OIS carrier being disposed inside the AF carrier; a first driving unit which moves the AF carrier in an optical axis direction; a second driving unit which moves the OIS carrier in a direction perpendicular to the optical axis direction; and a substrate including an outer side portion being disposed on the base, an inner side portion being disposed on the AF carrier, and a connecting portion connecting the outer side portion and the inner side portion, wherein the connecting portion of the substrate is formed integrally with the outer side portion of the substrate and the inner side portion of the substrate, and wherein the second driving unit includes a first coil being disposed in the substrate, and a first magnet being disposed in the OIS carrier.

## Description

### [Technical Field]

The present embodiment relates to a lens driving device, a camera device, and an optical apparatus.

### [Background Art]

A camera device is a device that photographs a picture or video of a subject, and is installed in optical devices such as smartphones, drones, and vehicles.

An auto-focus function that automatically adjusts the focus according to the distance of the subject is being applied to the camera device. In addition, a handshake correction function that is driven to offset the user's handshake is being applied.

At this time, a ball may be disposed between the moving unit and the fixed unit to guide the moving unit to move in the optical axis direction.

However, in lens drive devices of prior art, there is a problem in that the height relationship in an optical axis direction between the OIS coil and the OIS magnet changes depending on the position of the moving unit according to AF driving, making the control for OIS driving complicated.

(Patent Literature 1) KR 10-2015-0118005 A

### [Detailed Description of the Invention]

### [Technical Subject]

The present embodiment is intended to provide a lens driving device in which the height relationship in the optical axis direction between an OIS coil and an OIS magnet is maintained without change even when the position of a moving unit changes according to AF driving.

In addition, the present embodiment is intended to provide a lens driving device that improves the phenomenon in which Hall resolution deteriorates as the distance between the position detection sensor and the magnet increases during OIS driving.

In addition, it is intended to provide a lens driving device comprising a substrate for conducting current of a coil disposed in a moving unit.

In addition, the present embodiment is intended to provide a lens driving device having a minimized product size by optimizing the arrangement structure among a fixed unit, a moving unit, a ball, an elastic member, and a wire inside an actuator. That is, the present invention is intended to provide a lens driving device having at least a partial mismatch structure among an optical axis, a central axis of a ball, a central axis of a driving unit, a central axis of a wire, and a central axis of an outer periphery of a lens driving unit.

In addition, it is intended to provide a lens driving device that minimizes the product size by minimizing the thickness of the injection-molded product through a reinforcing member.

### [Technical Solution]

A lens driving device according to the present embodiment may comprise: a base; an AF carrier being disposed on the base; an OIS carrier being disposed inside the AF carrier; a first driving unit which moves the AF carrier in an optical axis direction; a second driving unit which moves the OIS carrier in a direction perpendicular to the optical axis direction; and a substrate comprising an outer portion being disposed on the base, an inner portion being disposed on the AF carrier, and a connecting portion connecting the outer portion and the inner portion, wherein the connecting portion of the substrate is formed integrally with the outer portion of the substrate and the inner portion of the substrate, and wherein the second driving unit comprises a first coil being disposed in the substrate, and a first magnet being disposed in the OIS carrier.

The first driving unit may comprise a third coil being disposed in the substrate and a third magnet being disposed in the base.

The second driving unit may comprise a second coil being disposed on the substrate and a second magnet being disposed on the OIS carrier.

The connecting portion of the substrate may comprise a first bent portion bent from the outer portion of the substrate, a second bent portion bent from the inner portion of the substrate, and a third bent portion being formed between the first bent portion and the second bent portion.

The first bent portion of the substrate is bent about a first axis, the second bent portion of the substrate is bent about a second axis, the third bent portion of the substrate is bent about a third axis, and the first axis, the second axis, and the third axis may be parallel to one another.

The radius of curvature of the third bent portion may be larger than the radius of curvature of the first bent portion, and the radius of curvature of the third bent portion may be larger than the radius of curvature of the second bent portion.

The third bent portion can be disposed at the same height as the first bent portion.

As the AF carrier moves, the third bent portion can be disposed at a higher position than the first bent portion

As the AF carrier moves, the third bent portion can be disposed at a lower position than the first bent portion.

The third bent portion may be overlapped with the second bent portion in the optical axis direction.

The third bent portion may be overlapped with the inner portion in the optical axis direction.

The connecting portion of the substrate may be overlapped with the inner portion of the substrate in the optical axis direction.

The connecting portion of the substrate comprises a first portion connecting the second bent portion and the third bent portion, and the first portion of the connecting portion of the substrate is overlapped with the outer portion of the substrate in a direction perpendicular to the outer portion of the substrate.

The AF carrier comprises a groove having a shape corresponding to the third bent portion at least in part, and the third bent portion of the substrate can be disposed in the groove of the AF carrier.

The first bent portion of the substrate is bent about a first axis that is perpendicular to the optical axis direction and parallel to the outer portion of the substrate; the second bent portion of the substrate is bent about a second axis that is perpendicular to the outer portion of the substrate; the third bent portion of the substrate is bent about a third axis that is parallel to the second axis; the connecting portion of the substrate comprises a first portion that connects the second bent portion and the third bent portion; and the first portion of the connecting portion of the substrate can be disposed on the outer side surface of the AF carrier.

The AF carrier comprises a first side surface and a second side surface being disposed on opposite sides, and a third side surface and a fourth side surface being disposed on opposite sides; the inner portion of the substrate comprises a lower plate unit which is disposed on a lower surface of the AF carrier and a second side portion which is bent from the lower plate unit and disposed on the second side surface of the AF carrier; the first coil is disposed on the second side of the substrate; and a sensor which detects the first magnet may be disposed on the lower plate unit of the substrate.

The inner portion of the substrate may comprise a first side portion being bent from the lower plate unit and being disposed on the first side surface of the AF carrier.

The inner portion of the substrate may comprise a third side portion being bent at the lower plate unit and being disposed on the third side surface of the AF carrier.

A lens driving device according to the present embodiment comprises: a base; an AF carrier being disposed on the base; an OIS carrier being disposed inside the AF carrier; a first driving unit moving the AF carrier in an optical axis direction; a second driving unit moving the OIS carrier in a direction perpendicular to the optical axis direction; and a substrate comprising an outer portion being disposed on the base, an inner portion being disposed on the AF carrier, and a connecting portion connecting the outer portion and the inner portion, wherein the connecting portion of the substrate is formed integrally with the outer portion of the substrate and the inner portion of the substrate, and wherein the first driving unit may comprise a third coil being disposed on the substrate, and a third magnet being disposed on the base.

The connecting portion may comprise a first portion extending from the outer portion, a second portion being extended from the inner portion, and a third bent portion connecting the first portion and the second portion.

The connecting portion may comprise a first bent portion connecting the first portion and the outer portion.

The connecting portion may comprise a second bent portion connecting the second portion and the inner portion.

A lens driving device according to the present embodiment comprises: a base; an AF carrier being disposed on the base; an OIS carrier being disposed within the AF carrier; a first driving unit for moving the AF carrier in an optical axis direction; a second driving unit for moving the OIS carrier in a direction perpendicular to the optical axis direction; and a substrate comprising an outer portion being disposed on the base, an inner portion being disposed on the AF carrier, and a connecting portion connecting the outer portion and the inner portion, wherein the AF carrier comprises a first side surface and a second side surface being disposed on opposite sides to each other, wherein the inner portion of the substrate comprises a first side portion being disposed on the first side surface of the AF carrier, and a second side portion being disposed on the second side surface of the AF carrier, and wherein the second side portion of the substrate may be disposed between the first side portion and the outer portion of the substrate.

A camera device according to the present embodiment may comprise: a printed circuit board; an image sensor being disposed on the printed circuit board; the lens driving device being disposed on the printed circuit board; and a lens being coupled to the lens driving device.

An optical apparatus according to the present embodiment may comprise a main body; a camera device being disposed in the main body; and a display being disposed in the main body and outputting at least one of an image and a video photographed by the camera device.

A lens driving device according to the present embodiment comprises: a base; an AF carrier being disposed on the base; an OIS carrier disposed inside the AF carrier; a first magnet and a first coil moving the AF carrier in an optical axis direction; a second magnet and a second coil moving the OIS carrier in a first direction perpendicular to the optical axis direction; a third magnet and a third coil moving the OIS carrier in a second direction perpendicular to the optical axis direction and the first direction; and a ball being disposed between the AF carrier and the OIS carrier, wherein the ball comprises first to fourth balls, and when viewed from above, a first point where an imaginary straight line connecting a center of the first ball and a center of the second ball and an imaginary straight line connecting a center of the third ball and a center of the fourth ball intersect may not coincide with an optical axis.

A lens driving device according to the present embodiment comprises: a base; an AF carrier being disposed on the base; an OIS carrier being disposed within the AF carrier; a first magnet and a first coil moving the AF carrier in an optical axis direction; a second magnet and a second coil moving the OIS carrier in a first direction perpendicular to the optical axis direction; and a third magnet and a third coil moving the OIS carrier in a second direction perpendicular to the optical axis direction and the first direction, wherein when viewed from above, a second point where an imaginary straight line passing through the center of the second magnet and being orthogonal to an outer side surface of the second magnet and an imaginary straight line passing through the center of the third magnet and being orthogonal to an outer side surface of the third magnet meet may not coincide with the optical axis.

A lens driving device according to the present embodiment comprises: a base; an AF carrier being disposed on the base; an OIS carrier being disposed inside the AF carrier; a first magnet and a first coil moving the AF carrier in an optical axis direction; a second magnet and a second coil moving the OIS carrier in a first direction perpendicular to the optical axis direction; a third magnet and a third coil moving the OIS carrier in a second direction perpendicular to the optical axis direction and the first direction; an elastic member being coupled to the OIS carrier; and a wire being coupled to the elastic member and the AF carrier, wherein the wire comprises first to fourth wires, the first wire and the second wire are disposed diagonally relative to each other, and the third wire and the fourth wire are disposed diagonally relative to each other, and when viewed from above, a third point where an imaginary straight line connecting a center of the first wire and a center of the second wire and an imaginary straight line connecting a center of the third wire and a center of the fourth wire meet may not coincide with an optical axis.

When viewed from above, a second point where an imaginary straight line passing through the center of the second magnet and being orthogonal to the outer side surface of the second magnet and an imaginary straight line passing through the center of the third magnet and being orthogonal to the outer side surface of the third magnet intersect may not coincide with the optical axis.

When viewed from above, the first point may not coincide with the second point.

The lens driving device comprises an elastic member being coupled with the OIS carrier; and a wire being coupled with the elastic member and the AF carrier, wherein the wire comprises first to fourth wires, and when viewed from above, a third point where an imaginary straight line connecting the center of the first wire and the center of the second wire and an imaginary straight line connecting the center of the third wire and the center of the fourth wire meet may not coincide with an optical axis.

When viewed from above, the first point may not coincide with the third point.

The lens driving device comprises an elastic member being coupled with the OIS carrier; and a wire being coupled with the elastic member and the AF carrier, wherein the wire comprises first to fourth wires, and when viewed from above, a third point where an imaginary straight line connecting the center of the first wire and the center of the second wire and an imaginary straight line connecting the center of the third wire and the center of the fourth wire meet may not coincide with an optical axis.

When viewed from above, the second point may coincide with the third point.

When viewed from above, the center of the base may not coincide with the first point, and when viewed from above, the center of the base may not coincide with the optical axis.

The base comprises a first side surface and a second side surface being disposed opposite to each other, and a third side surface and a fourth side surface being disposed opposite to each other, and when viewed from above, a point where an imaginary straight line being spaced apart by a distance equal to the first side surface of the base and the second side surface of the base and an imaginary straight line being spaced apart by a distance equal to the third side surface of the base and the fourth side surface of the base intersect may coincide with the center of the base.

The outer side surface of the second magnet faces the second coil, and the outer side surface of the third magnet may face the third coil.

When viewed from above, the second point may be disposed at a position corresponding to the optical axis in the second direction and spaced apart in the first direction.

The OIS carrier comprises a hole penetrating the OIS carrier in the optical axis direction, wherein a central axis of the hole of the OIS carrier may coincide with the optical axis.

A camera device according to the present embodiment may comprise a printed circuit board; an image sensor being disposed on the printed circuit board; the lens driving device being disposed on the printed circuit board; and a lens being coupled to the lens driving device.

An optical apparatus according to the present embodiment may comprise: a main body; a camera device being disposed in the main body; and a display being disposed in the main body and outputting at least one of an image and a video photographed by the camera device.

A lens driving device according to the present embodiment comprises: a base; an AF carrier being disposed on the base; an OIS carrier being disposed inside the AF carrier; a first magnet and a first coil moving the AF carrier in an optical axis direction; a second magnet and a second coil moving the OIS carrier in a first direction perpendicular to the optical axis direction; and a third magnet and a third coil moving the OIS carrier in a second direction perpendicular to the optical axis direction and intersecting the first direction, wherein the AF carrier comprises a lower plate unit being disposed between the base and the OIS carrier in the optical axis direction, a side portion being extended from the lower plate unit, a first reinforcing member being disposed on the lower plate unit, and a second reinforcing member being disposed on the side portion, wherein the first reinforcing member may comprise a portion being in contact with the second reinforcing member.

The second reinforcing member comprises a body portion being disposed parallel to the optical axis and a second portion bent from the body portion, and the second portion of the second reinforcing member can be overlapped with the first reinforcing member in the optical axis direction.

The first reinforcing member may comprise a first portion being overlapped with the second portion of the second reinforcing member in the optical axis direction.

The first portion of the first reinforcing member may comprise a shape corresponding to the second portion of the second reinforcing member.

At least one of the first portion of the first reinforcing member and the second portion of the second reinforcing member may be protruded outwardly from the AF carrier when viewed from above.

At least one of the first portion of the first reinforcing member and the second portion of the second reinforcing member can be opened toward the outside of the AF carrier.

At least one of the first portion of the first reinforcing member and the second portion of the second reinforcing member may be a portion formed by cutting.

The first reinforcing member comprises a body portion being disposed on the lower plate unit of the AF carrier, and a bent portion being bent from the body portion and having a hook shape, and the bent portion of the first reinforcing member can may disposed on the side portion of the AF carrier.

The lens driving device may comprise a substrate being disposed on a lower surface of the lower plate unit of the AF carrier; and a sensor being disposed on the substrate to detect at least one of the second magnet and the third magnet, and the first reinforcing member may comprise a groove formed at a position corresponding to the sensor.

The first reinforcing member can be bonded and fixed to the second reinforcing member.

The first reinforcing member can be welded to the second reinforcing member.

A camera device according to the present embodiment may comprise: a printed circuit board; an image sensor being disposed on the printed circuit board; the lens driving device being disposed on the printed circuit board; and a lens being coupled to the lens driving device.

An optical apparatus according to the present embodiment may comprise: a main body; a camera device being disposed in the main body; and a display being disposed in the main body and outputting at least one of an image and a video photographed by the camera device.

### [Advantageous Effects]

Through the present embodiment, even if the position of the moving unit changes according to AF driving, the height relationship in an optical axis direction between the OIS coil and the OIS magnet can be maintained without being changed.

In addition, through the present embodiment, the phenomenon of Hall resolution deteriorating as the distance between the position detection sensor and the magnet increases during OIS driving can be improved.

In addition, the substrate of the present embodiment allows the coil to move in an energized state. Furthermore, the substrate of the present embodiment is easy to assemble and can minimize interference with the moving unit when the moving unit moves.

In addition, through the present embodiment, the arrangement structure among the fixed unit, moving unit, ball, elastic member and wire inside the actuator can be optimized, so that the actuator product size can be minimized.

In other words, the actuator product size can be minimized through at least some mismatch structure among the optical axis, the central axis of the ball, the central axis of the driving unit, the central axis of the wire, and the central axis of the outer surface of the lens driving device.

In addition, the reinforcing member of the present embodiment can minimize the thickness of the injection-molded product, thereby minimizing the size of the actuator product. Furthermore, the strength of the injection-molded product can be secured through the reinforcing member.

### [Brief Description of Drawings]

FIG. 1 is a perspective view of a lens driving device according to the present embodiment.
FIG. 2 is a cross-sectional view taken from A-A of FIG. 1.
FIG. 3 is a cross-sectional view taken from B-B of FIG. 1.
FIG. 4 is a cross-sectional view taken from C-C of FIG. 1.
FIG. 5 is a cross-sectional view taken from D-D of FIG. 1.
FIG. 6 is an enlarged view of a partial region of FIG. 5.
FIG. 7 is a cross-sectional view taken from above of a lens driving device according to the present embodiment cut perpendicular to an optical axis.
FIG. 8 is an exploded perspective view of a lens driving device according to the present embodiment.
FIG. 9 is an exploded perspective view taken from a different direction than FIG. 8.
FIG. 10 is a plan view illustrating a state in which one of two stopper members is omitted in a lens driving device according to the present embodiment.
FIG. 11 is a partial perspective view illustrating a lens driving device according to the present embodiment in which the cover is omitted and a reinforcing member is seen through.
FIG. 12 is a bottom perspective view illustrating the stopper member being separated from FIG. 11.
FIG. 13 is a perspective view illustrating a lens driving device according to the present embodiment with the cover omitted.
FIG. 14 is a perspective view seen from a different direction from FIG. 13.
FIG. 15 is a perspective view according to a modified embodiment of FIG. 14.
FIG. 16 is a side surface view illustrating a lens driving device according to the present embodiment with the cover omitted.
FIG. 17 is a side surface view seen from a different direction from FIG. 16.
FIG. 18 is a perspective view illustrating a fixed unit and related components of a lens driving device according to the present embodiment.
FIG. 19 is a perspective view illustrating a substrate and related components of the lens driving device according to the present embodiment. FIG. 20a is a perspective view from a different direction than FIG. 19.
FIG. 20b is a perspective view and a partially enlarged view according to a modified embodiment of 20a.
FIG. 21 is a side surface view illustrating a substrate and related components of a lens driving device according to the present embodiment.
FIG. 22 is a plan view illustrating a substrate and related components of a lens driving device according to the present embodiment.
FIG. 23 is a perspective view illustrating a base and related components of a lens driving device according to the present embodiment.
FIG. 24 is a perspective view illustrating a moving unit and related components of a lens driving device according to the present embodiment.
FIG. 25 is a bottom perspective view viewed from a different direction than FIG. 24.
FIG. 26 is an exploded perspective view of FIG. 24.
FIG. 27 is a diagram illustrating for a comparison of positions among various central axes according to the present embodiment.
FIG. 28 is a perspective view illustrating an AF carrier and a reinforcing member of a lens driving device according to the present embodiment.
FIG. 29a is a perspective view and a partially enlarged view illustrating a reinforcing member of a lens driving device according to the present embodiment.
FIG. 29b is an exploded perspective view illustrating a reinforcing member of a lens driving device according to the present embodiment.
FIG. 30 is a perspective view of FIG. 24 with the cover and substrate omitted.
FIG. 31 is a perspective view of FIG. 30 with the OIS moving unit and related components omitted.
FIG. 32 is a perspective view illustrating the OIS moving unit and related components according to the present embodiment.
FIG. 33 is a bottom perspective view of FIG. 32 viewed from a different direction.
FIG. 34 is a bottom perspective view of FIG. 33 with the preload member and metal member omitted.
FIG. 35 is a plan view of the lens driving device according to the present embodiment with the cover omitted.
FIG. 36 is an enlarged view of area A of FIG. 35.
FIG. 37 is a bottom perspective view illustrating the AF guide ball and related components of the lens driving device according to the present embodiment.
FIG. 38 is a perspective view illustrating the AF guide ball of the lens driving device according to the present embodiment disposed on the fixed unit.
FIG. 39 is a perspective view illustrating the AF guide ball of the lens driving device according to the present embodiment disposed in the moving unit.

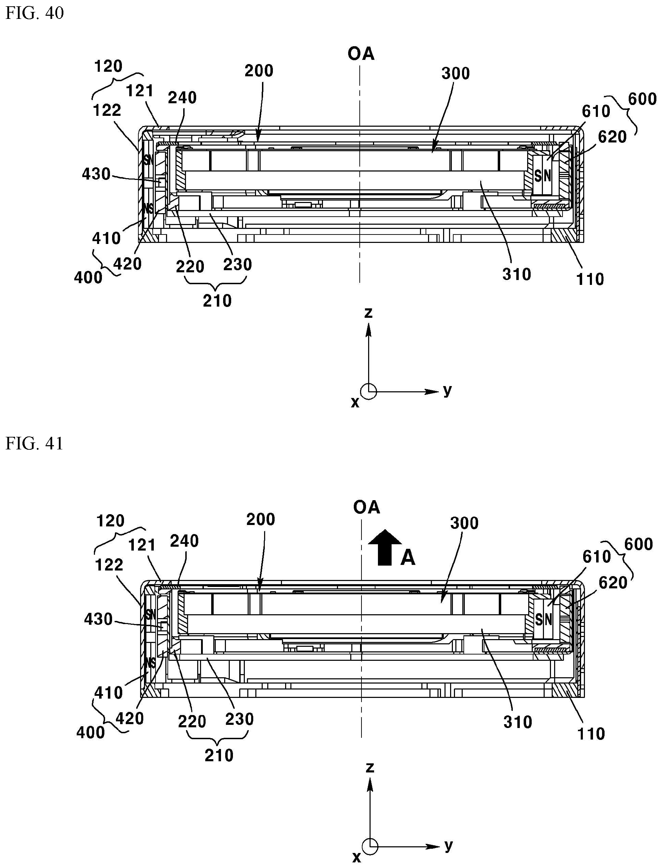

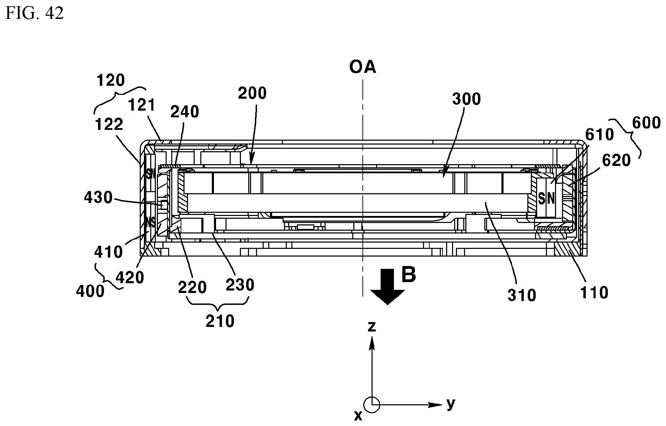

FIGS. 40 to 42 are diagrams for explaining the auto focus driving of the lens driving device according to the present embodiment. FIG. 40 is a cross-sectional view illustrating the appearance of the moving unit in an initial state in which no current is applied to the AF coil. FIG. 41 is a cross-sectional view illustrating the appearance in which the moving unit moved upward in the optical axis direction when a forward current is applied to the AF coil. FIG. 42 is a cross-sectional view illustrating the appearance in which the moving unit moved downward in the optical axis direction when a reverse current is applied to the AF coil.

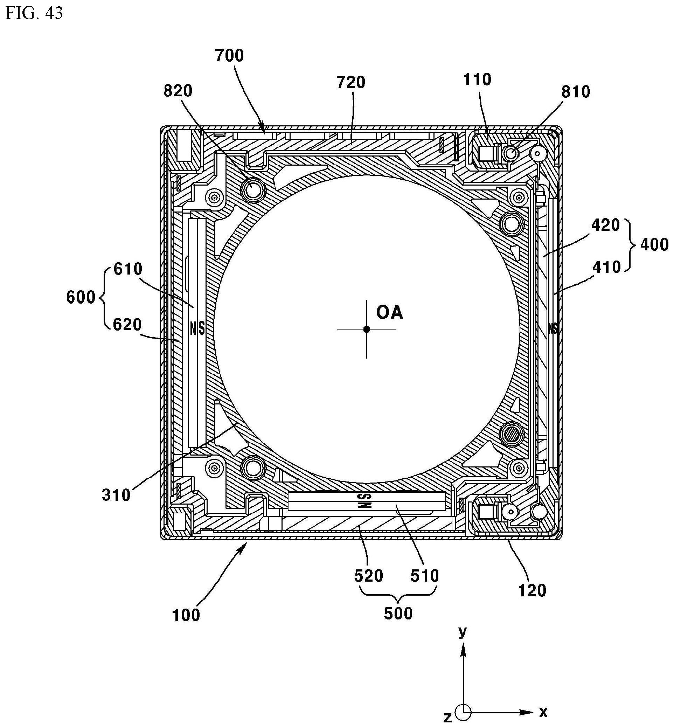

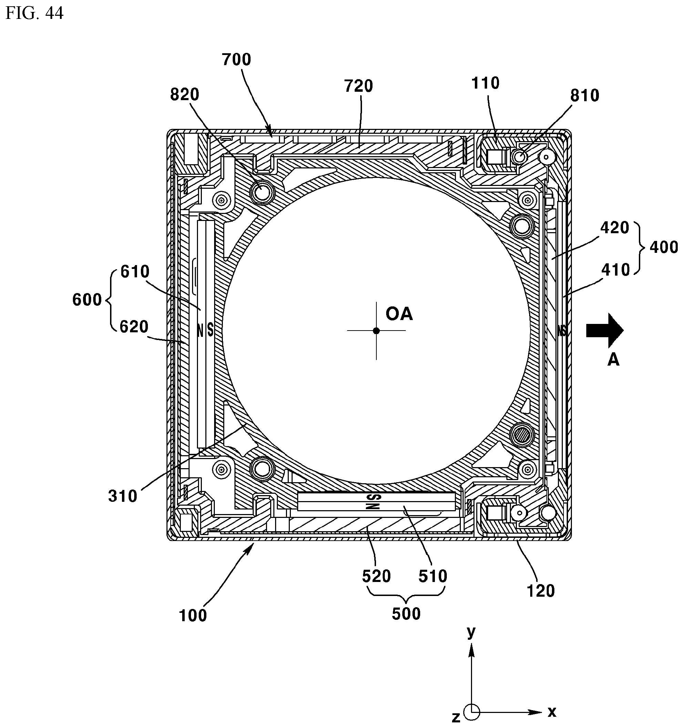

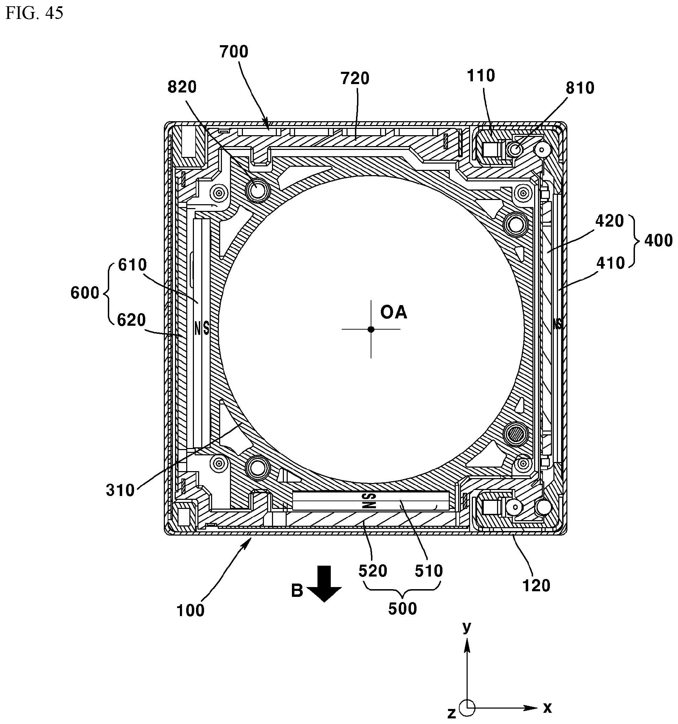

FIGS. 43 to 45 are drawings for explaining the hand shake correction driving of the lens driving device according to the present embodiment. FIG. 43 is a cross-sectional view illustrating the appearance of the OIS moving unit in an initial state in which no current is applied to the OIS-x coil and the OIS-y coil. FIG. 44 is a cross-sectional view illustrating the appearance in which the OIS moving unit moves in an x-axis direction perpendicular to the optical axis when current is applied to the OIS-x coil. FIG. 45 is a cross-sectional view illustrating the appearance in which the OIS moving unit moves in a y-axis direction perpendicular to both the optical axis and the x-axis direction when current is applied to the OIS-y coil.
FIG. 46 is an exploded perspective view of a camera device according to the present embodiment.
FIG. 47 is a perspective view of an optical apparatus according to the present embodiment.
FIG. 48 is a perspective view of an optical apparatus according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

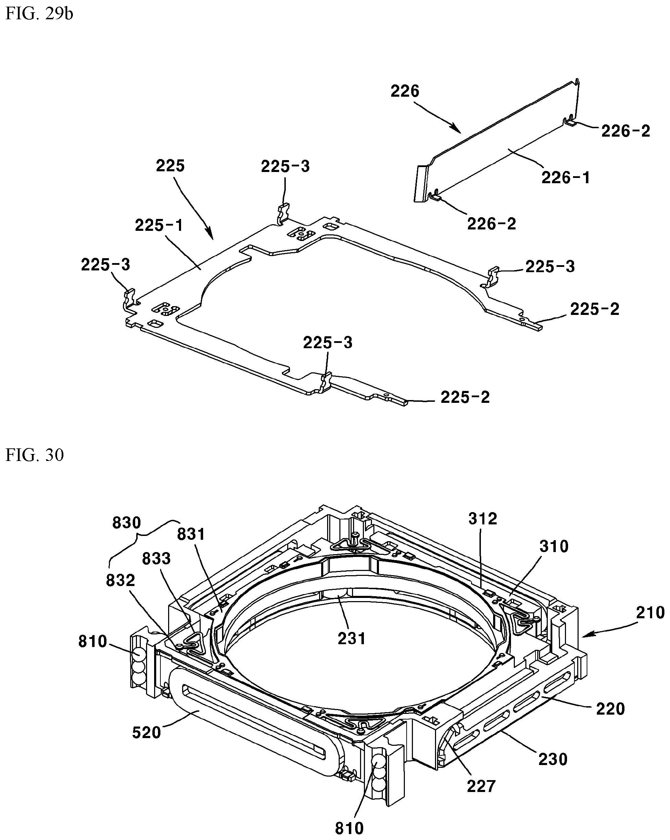

The 'optical axis (optical axis, refer to OA in FIG. 30) direction' used hereinafter is defined as the optical axis direction of the lens and/or image sensor being coupled to the lens driving device.

The 'vertical direction' used hereinafter may be a direction parallel to or the same direction as the optical axis. The vertical direction may correspond to a 'z-axis direction'. The 'horizontal direction' used hereinafter may be a direction perpendicular to the vertical direction. That is, the horizontal direction may be a direction perpendicular to the optical axis. Therefore, the horizontal direction may comprise an 'x-axis direction' and a 'y-axis direction'.

Hereinafter, one of the 'x-axis direction' and the 'y-axis direction' may be referred to as a 'first direction' and the other may be referred to as a 'second direction'.

The 'auto focus (AF) function' used hereinafter is defined as a function that automatically focuses on a subject by adjusting the distance from the image sensor by moving the lens in the optical axis direction according to the distance of the subject so that a clear image of the subject can be obtained on the image sensor. In addition, 'closed-loop auto focus (CLAF) control' is defined as detecting the distance between the image sensor and the lens and controlling the position of the lens through feedback in real time in order to improve the accuracy of focus adjustment.

The 'optical image stabilization (OIS) function' used hereinafter is defined as a function that moves or tilts the lens in a direction perpendicular to the optical axis to offset hand shake in order to prevent an image or video from shaking due to the user's hand shake. In addition, 'closed-loop auto focus (CLAF) control' is defined as detecting the position of the lens with respect to the image sensor and controlling the feedback of the lens position in real time in order to improve the accuracy of hand shake correction.

Hereinafter, one of the "AF moving unit **200**" and the "OIS moving unit **300**" may be referred to as a "first moving unit" and the other may be referred to as a "second moving unit".

Hereinafter, one of the "AF driving unit" and the "OIS driving unit" may be referred to as the "first driving unit" and the other may be referred to as the "second driving unit".

Hereinafter, one among the "AF driving unit", the "OIS-x driving unit" and the "OIS-y driving unit" may be referred to as a "first driving unit", another may be referred to as a "second driving unit" and yet another may be referred to as a "third driving unit".

Hereinafter, one among the "AF magnet **410**", the "OIS-x magnet **510**", and the "OIS-y magnet **610**" may be referred to as a "first magnet", another may be referred to as a "second magnet", and yet another may be referred to as a "third magnet".

Hereinafter, one among the "AF coil **420**", the "OIS-x coil **520**", and the "OIS-y coil **620**" may be referred to as a "first coil", another may be referred to as a "second coil", and yet another may be referred to as the "third coil".

Hereinafter, one of among "AF sensor **430**", the "OIS-x sensor **530**", and the "OIS-y sensor **630**" may be referred to as a "first sensor", another may be referred to as a "second sensor", and yet another may be referred to as a "third sensor".

Hereinafter, one of the "AF guide ball **810**" and the "OIS guide ball **820**" may be referred to as a "first ball" and the other may be referred to as a "second ball". Hereinafter, each of the "AF guide ball **810**" and the "OIS guide ball **820**" may be referred to as a "ball".

Hereinafter, one of the "holder member **220**" and the "preload member **230**" may be referred to as a "first member" and the other may be referred to as a "second member". Or, hereinafter, one of the "holder member **220**" and the "preload member **230**" may be referred to as a "first housing" and the other may be referred to as a "second housing".

Hereinafter, one of the individual balls of the AF guide ball **810** and the individual balls of the OIS guide ball **820** may be referred to as a "first unit ball", the other may be referred to as a "second unit ball", the other may be referred to as a "third unit ball", and the yet other may be referred to as a "fourth unit ball". Furthermore, the "nth unit ball" may be used to refer to the individual balls, such as a "fifth unit ball", a "sixth unit ball", and the like.

Hereinafter, one of the "pillar portion **111**" and the "external wall portion **112**" may be referred to as the "first portion" and the other may be referred to as the "second portion".

Hereinafter, one of the "inner groove **111-1**" and the "outer groove **112-1**" may be referred to as a "first groove" and the other may be referred to as a "second groove".

Hereinafter, one of the "inner groove **224-1**" and the "outer groove **224-2**" may be referred to as a "first groove" and the other may be referred to as a "second groove".

Hereinafter, one of the "inner ball **811**" and the "outer ball **812**" may be referred to as a "first unit ball" and the other may be referred to as a "second unit ball." Or, hereinafter, one of the "inner ball **811**" and the "outer ball **812**" may be referred to as a "first ball" and the other may be referred to as a "second ball."

Hereinafter, one among the "upper bent portion **921**", the "lower bent portion **922**", and the "connecting bent portion **923**" may be referred to as a "first bent portion", the other may be referred to as a "second bent portion", and the yet other may be referred to as a "third bent portion."

Hereinafter, the "AF carrier **210**" may be referred to as a "housing". Hereinafter, the "OIS carrier **310**" may be referred to as a "bobbin."

Hereinafter, one of the "horizontal reinforcing member **225**" and the "vertical reinforcing member **226**" may be referred to as a "first reinforcing member" and the other may be referred to as a "second reinforcing member."

Hereinafter, one among the "first side portion **722**", the "second side portion **723**", and the "third side portion **724**" may be referred to as a "first side portion", the other may be referred to as a "second side portion", and yet the other may be referred to as a "third side portion".

Hereinafter, the configuration of the lens driving device according to the present embodiment is described with reference to the drawings.

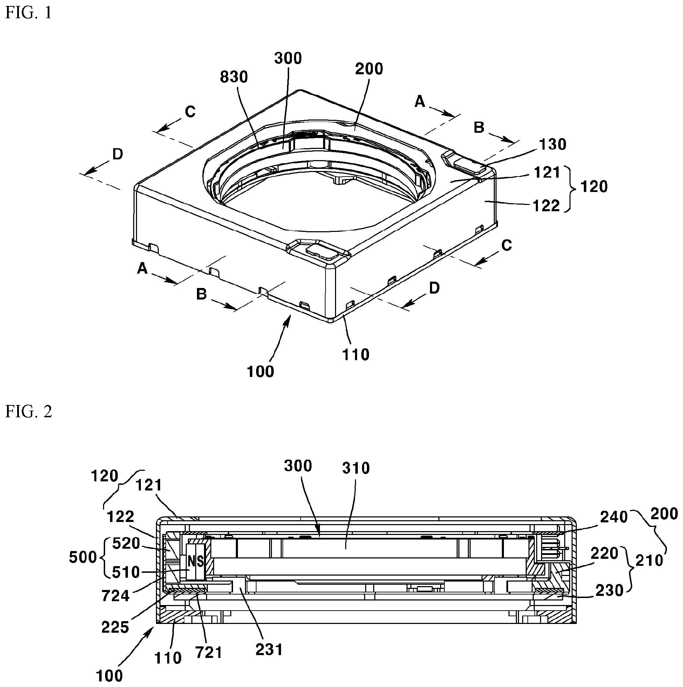

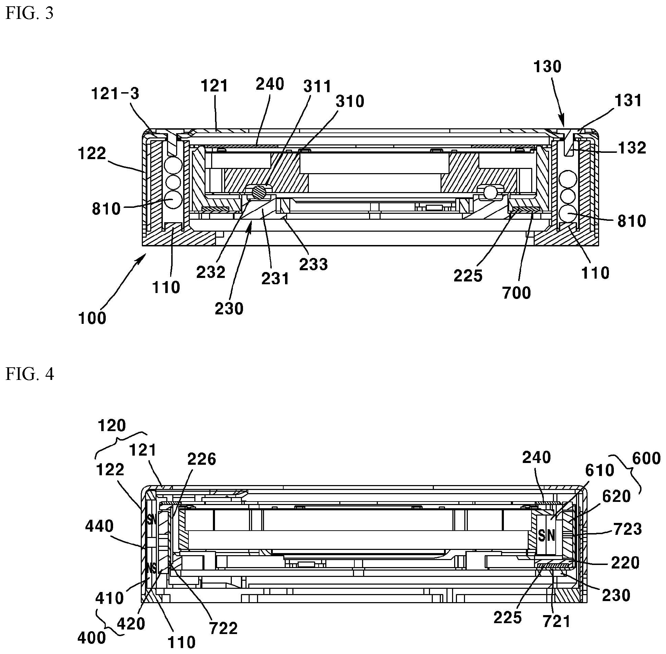

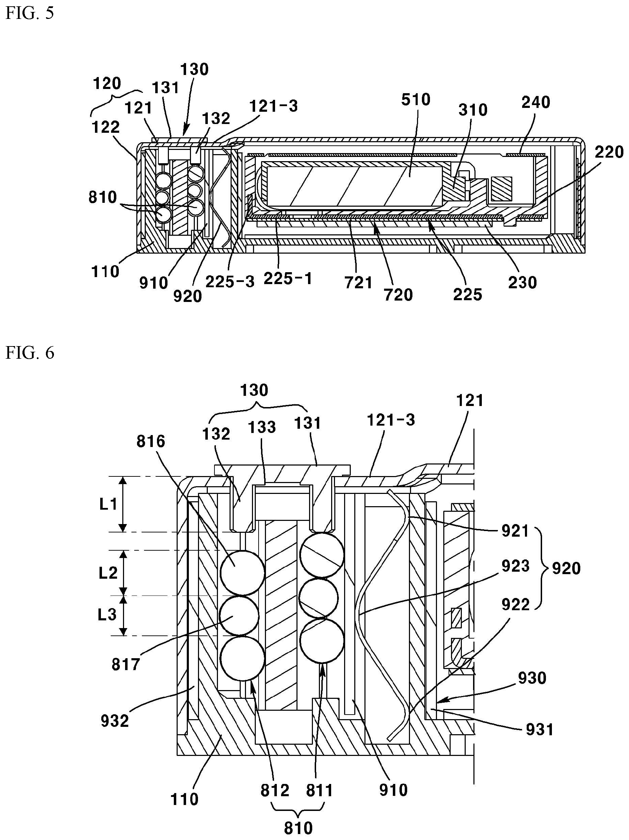

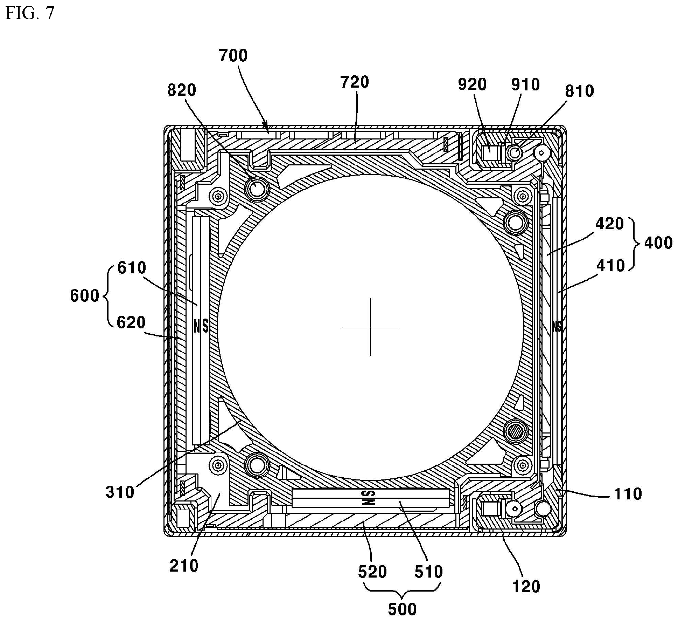

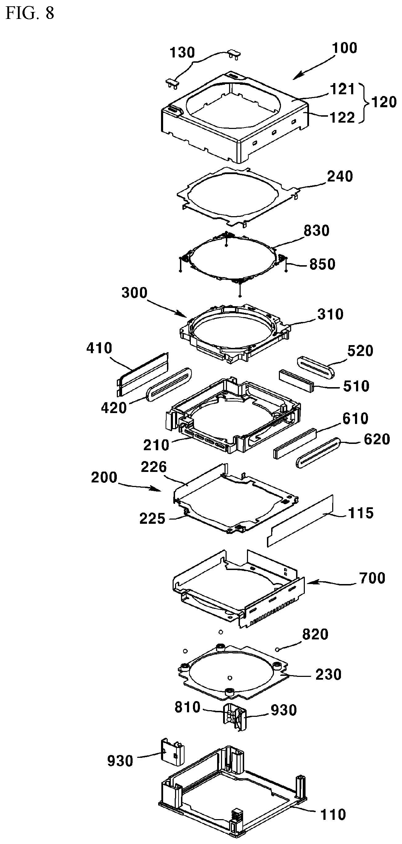

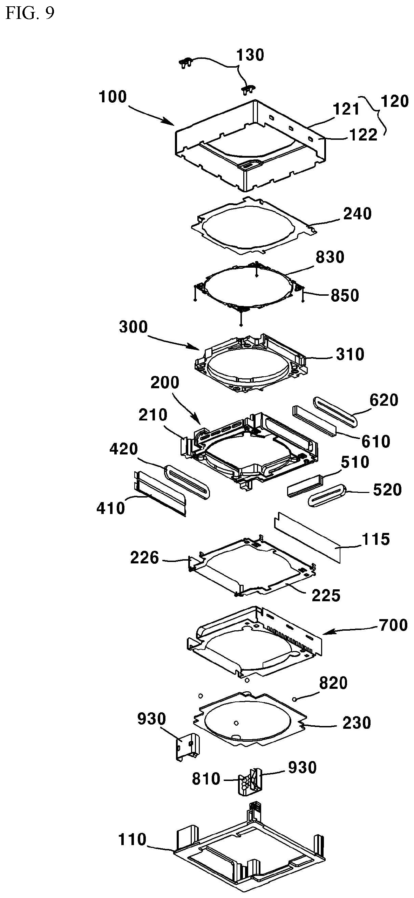

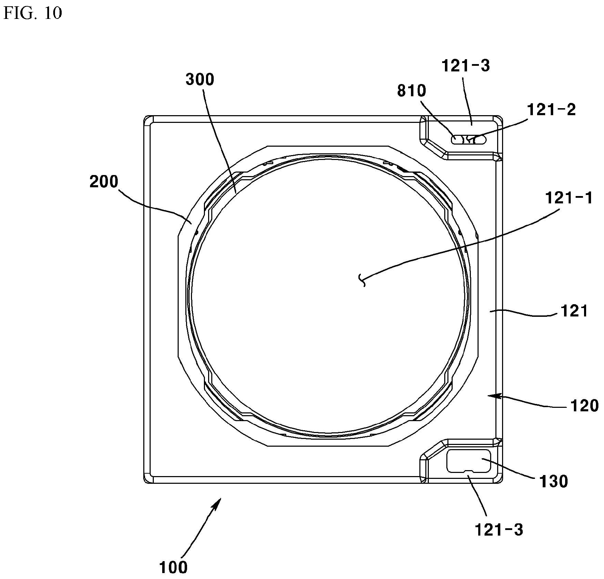

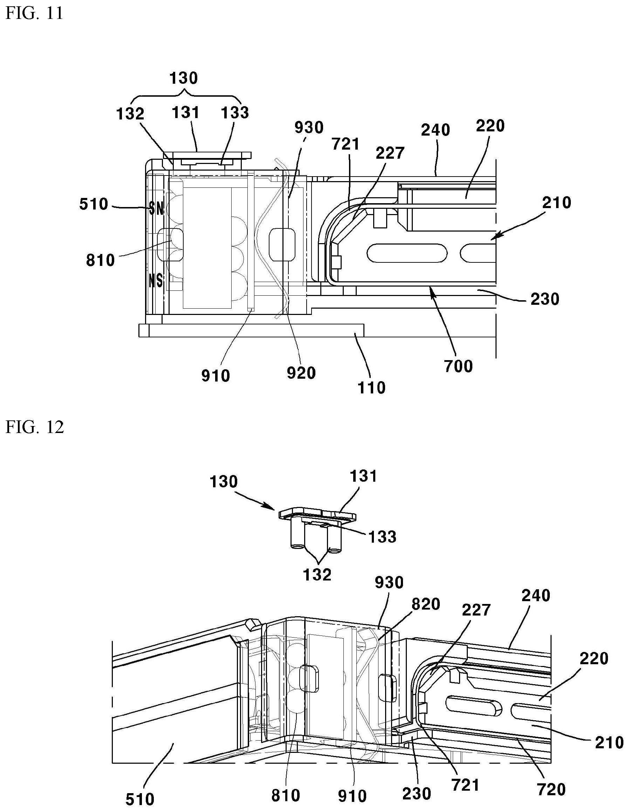

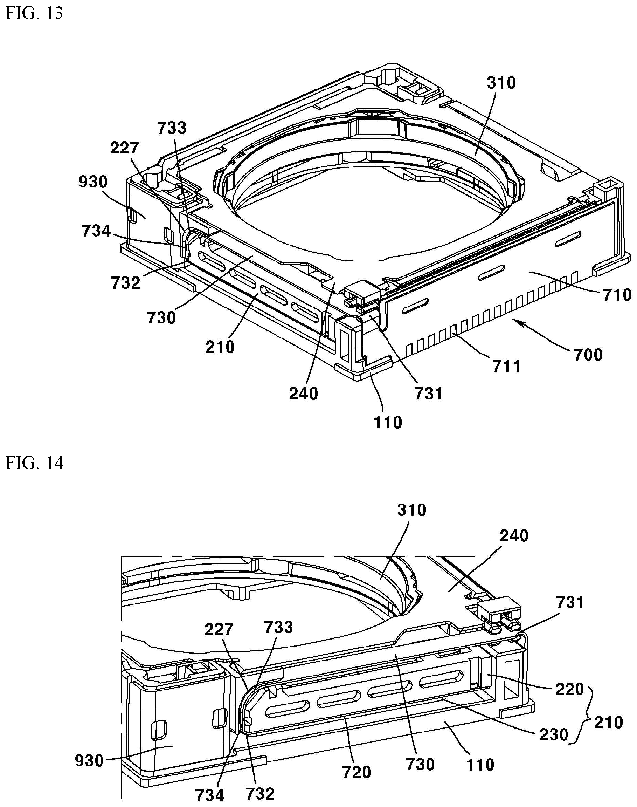

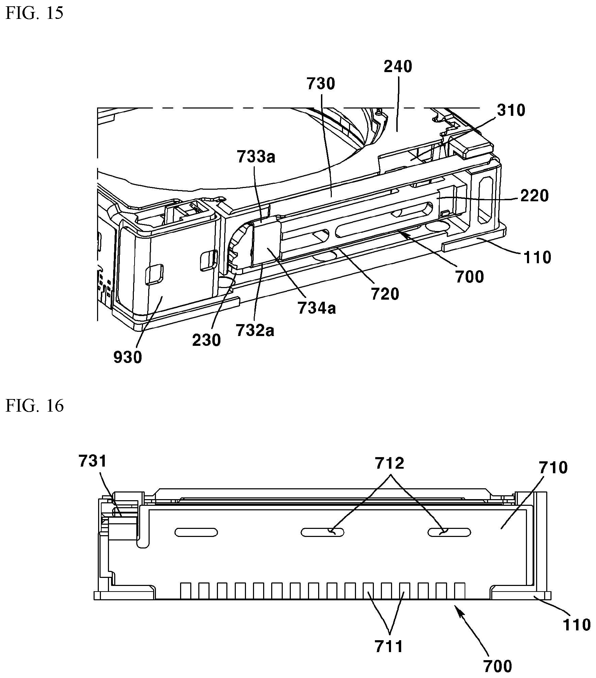

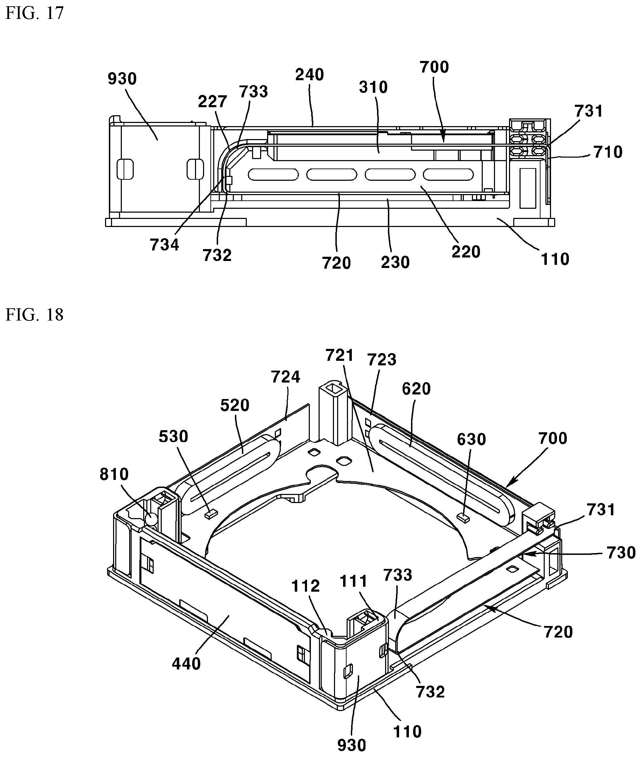

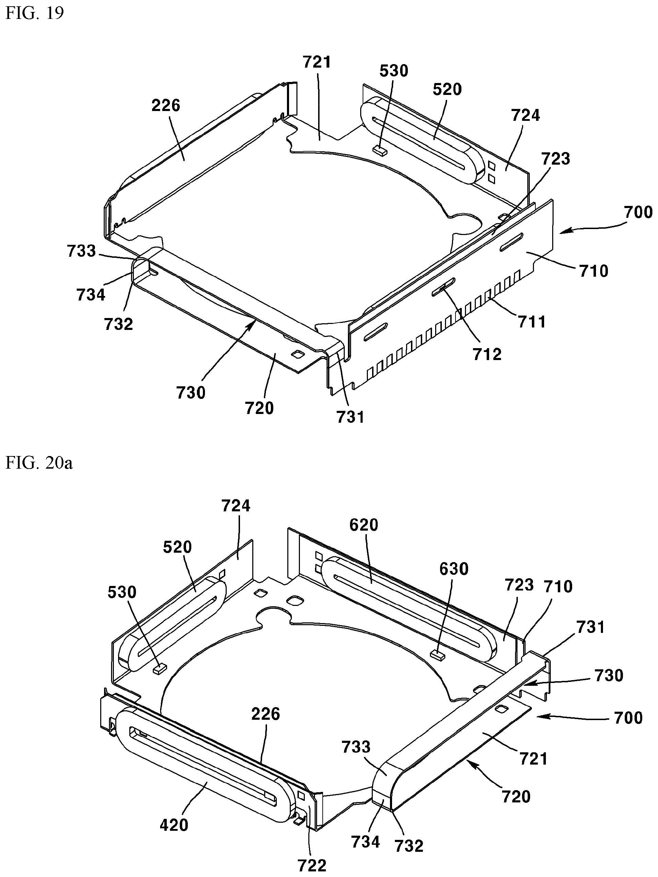

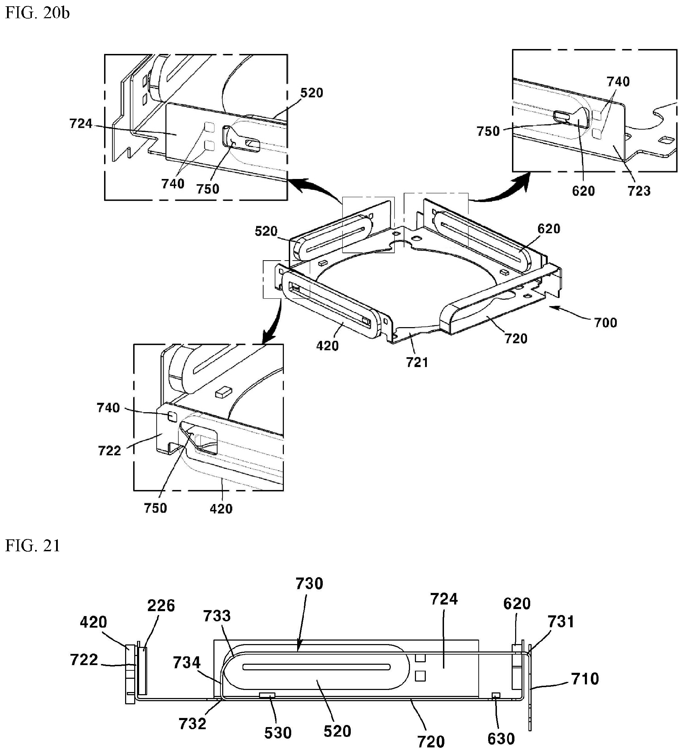

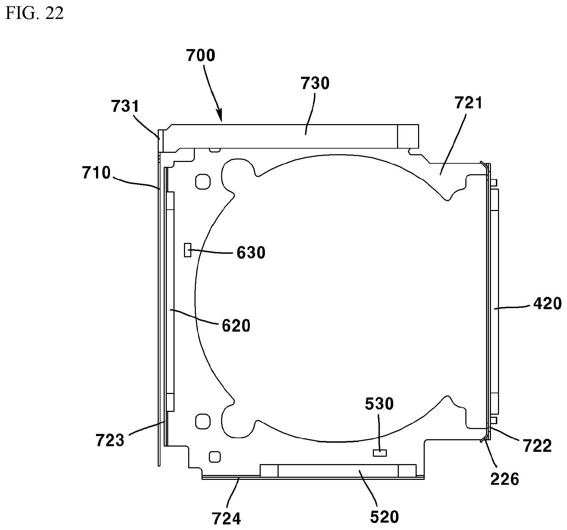

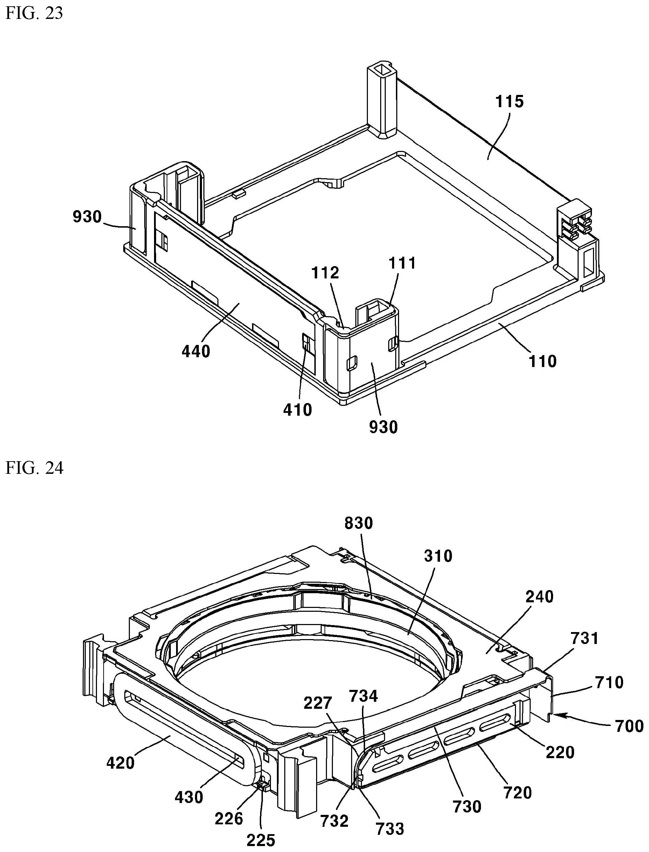

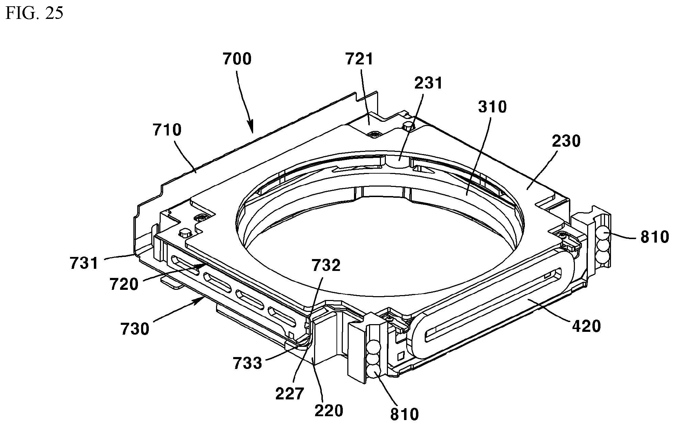

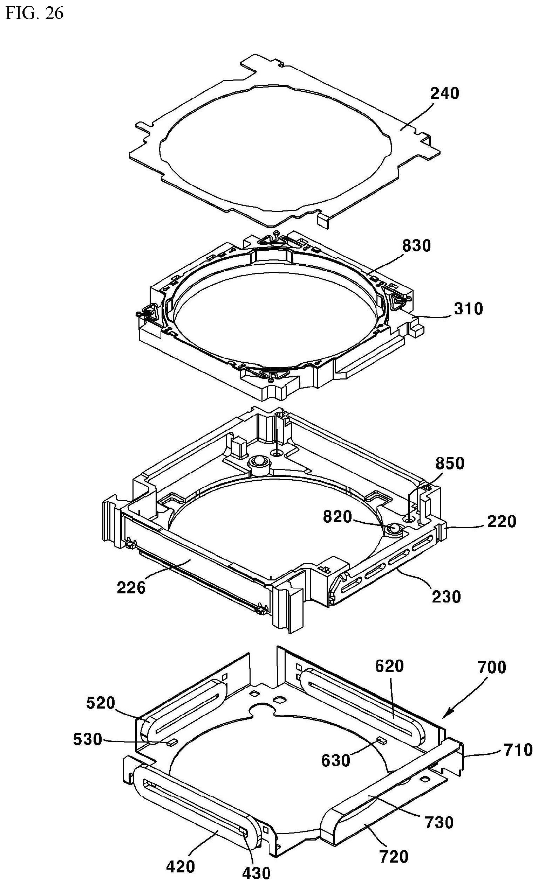

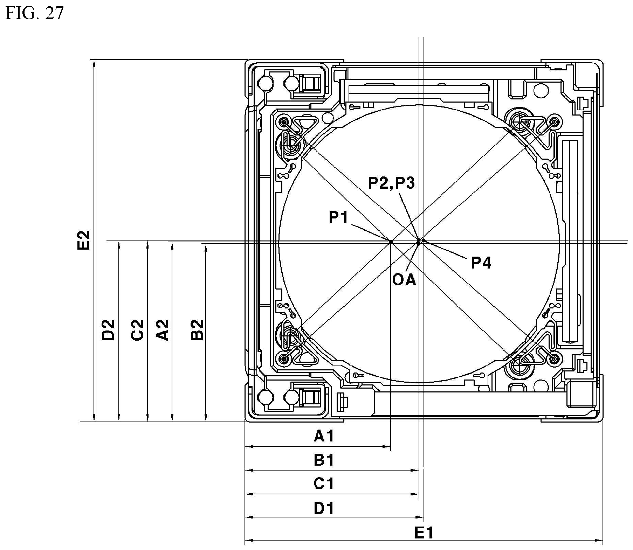

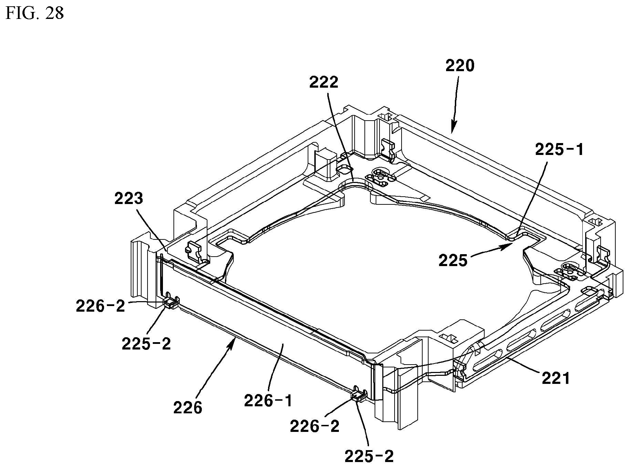

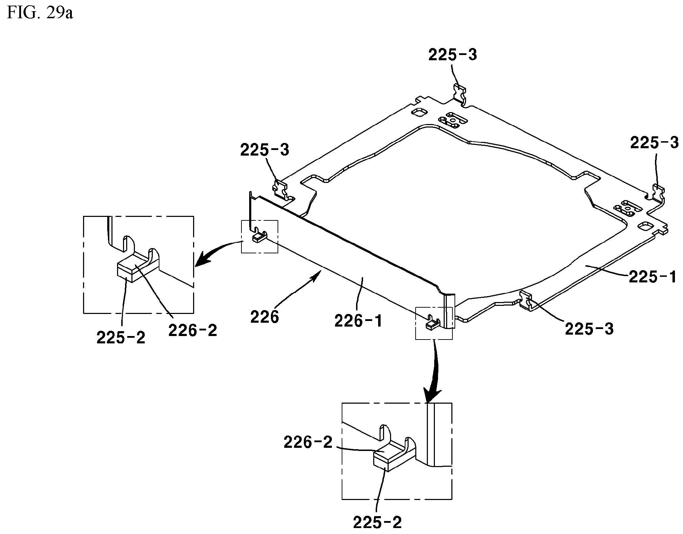

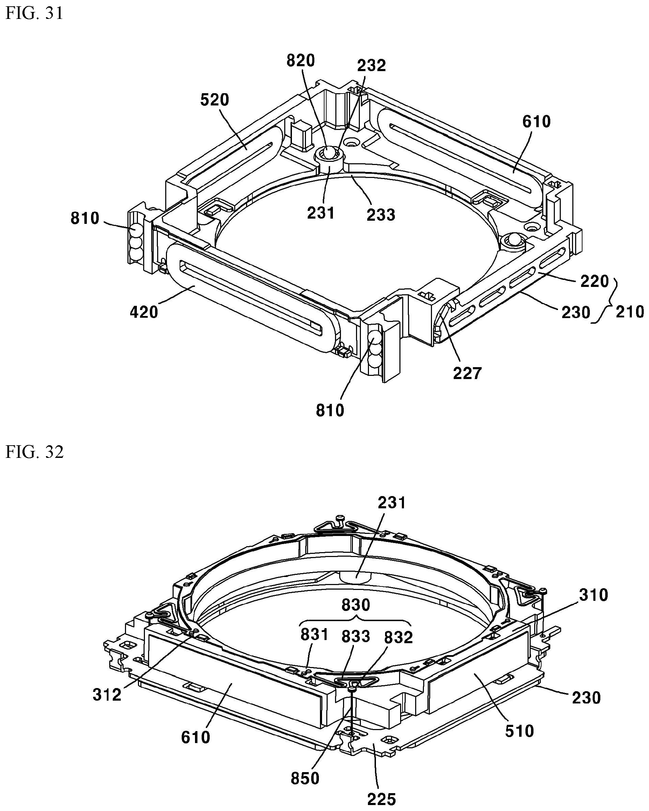

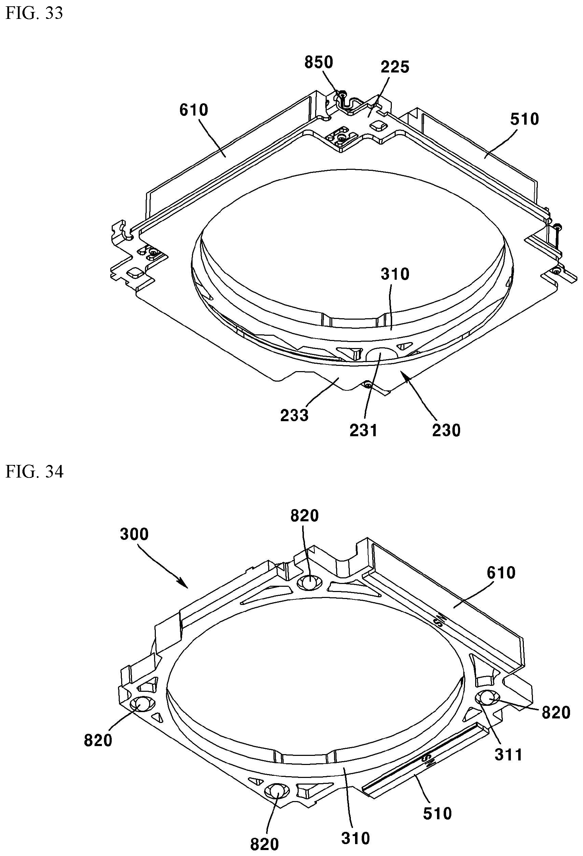

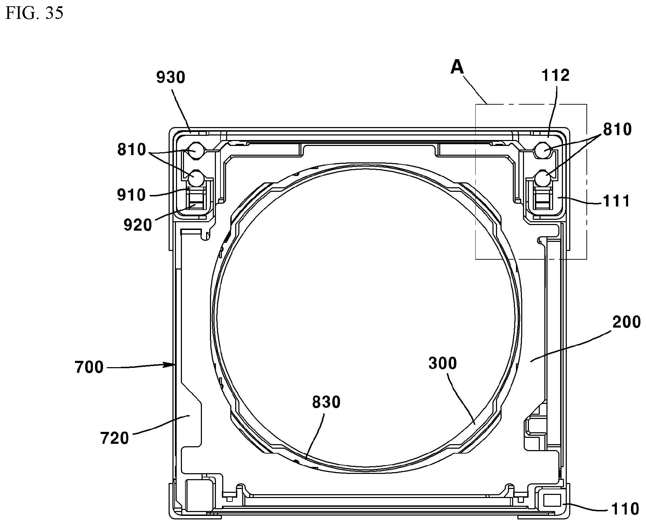

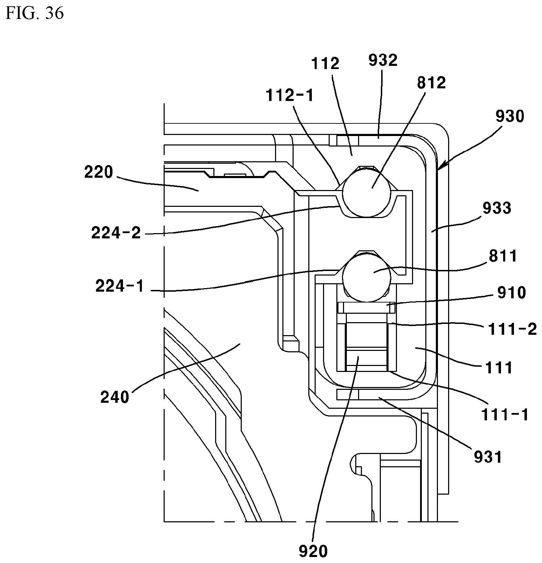

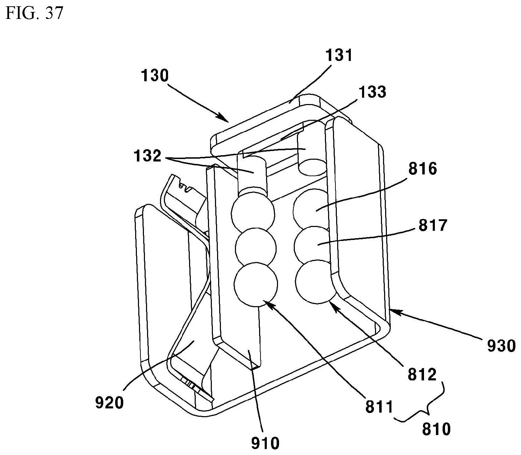

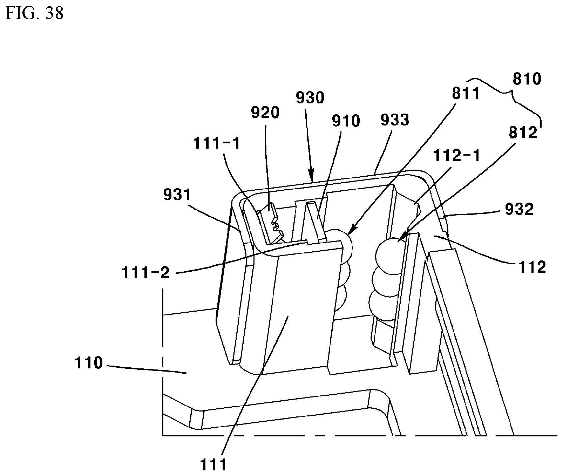

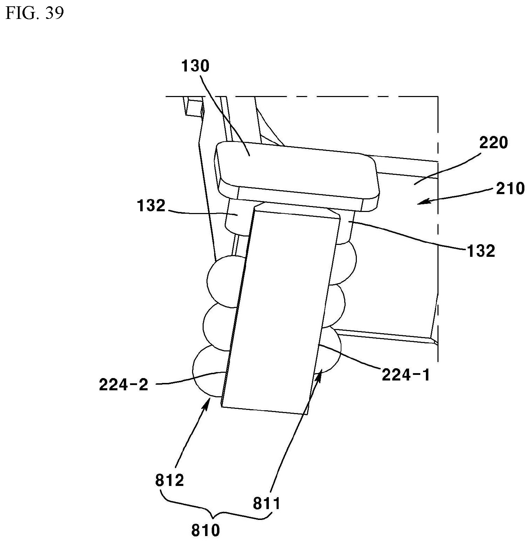

FIG. 1 is a perspective view of a lens driving device according to the present embodiment; FIG. 2 is a cross-sectional view taken from A-A of FIG. 1; FIG. 3 is a cross-sectional view taken from B-B of FIG. 1; FIG. 4 is a cross-sectional view taken from C-C of FIG. 1; FIG. 5 is a cross-sectional view taken from D-D of FIG. 1; FIG. 6 is an enlarged view of a partial region of FIG. 5; FIG. 7 is a cross-sectional view taken from above of a lens driving device according to the present embodiment cut perpendicular to an optical axis; FIG. 8 is an exploded perspective view of a lens driving device according to the present embodiment; FIG. 9 is an exploded perspective view taken from a different direction than FIG. 8; FIG. 10 is a plan view illustrating a state in which one of two stopper members is omitted in a lens driving device according to the present embodiment; FIG. 11 is a partial perspective view illustrating a lens driving device according to the present embodiment in which the cover is omitted and a reinforcing member is seen through; FIG. 12 is a bottom perspective view illustrating the stopper member being separated from FIG. 11; FIG. 13 is a perspective view illustrating a lens driving device according to the present embodiment with the cover omitted; FIG. 14 is a perspective view seen from a different direction from FIG. 13; FIG. 15 is a perspective view according to a modified embodiment of FIG. 14; FIG. 16 is a side surface view illustrating a lens driving device according to the present embodiment with the cover omitted; FIG. 17 is a side surface view seen from a different direction from FIG. 16; FIG. 18 is a perspective view illustrating a fixed unit and related components of a lens driving device according to the present embodiment; FIG. 19 is a perspective view illustrating a substrate and related components of the lens driving device according to the present embodiment; FIG. 20a is a perspective view from a different direction than FIG. 19; FIG. 20b is a perspective view and a partially enlarged view according to a modified embodiment of 20a; FIG. 21 is a side surface view illustrating a substrate and related components of a lens driving device according to the present embodiment; FIG. 22 is a plan view illustrating a substrate and related components of a lens driving device according to the present embodiment; FIG. 23 is a perspective view illustrating a base and related components of a lens driving device according to the present embodiment; FIG. 24 is a perspective view illustrating a moving unit and related components of a lens driving device according to the present embodiment; FIG. 25 is a bottom perspective view viewed from a different direction than FIG. 24; FIG. 26 is an exploded perspective view of FIG. 24; FIG. 27 is a diagram illustrating for a comparison of positions among various central axes according to the present embodiment; FIG. 28 is a perspective view illustrating an AF carrier and a reinforcing member of a lens driving device according to the present embodiment; FIG. 29a is a perspective view and a partially enlarged view illustrating a reinforcing member of a lens driving device according to the present embodiment; FIG. 29b is an exploded perspective view illustrating a reinforcing member of a lens driving device according to the present embodiment; FIG. 30 is a perspective view of FIG. 24 with the cover and substrate omitted; FIG. 31 is a perspective view of FIG. 30 with the OIS moving unit and related components omitted; FIG. 32 is a perspective view illustrating the OIS moving unit and related components according to the present embodiment; FIG. 33 is a bottom perspective view of FIG. 32 viewed from a different direction; FIG. 34 is a bottom perspective view of FIG. 33 with the preload member and metal member omitted; FIG. 35 is a plan view of the lens driving device according to the present embodiment with the cover omitted; FIG. 36 is an enlarged view of area A of FIG. 35; FIG. 37 is a bottom perspective view illustrating the AF guide ball and related components of the lens driving device according to the present embodiment; FIG. 38 is a perspective view illustrating the AF guide ball of the lens driving device according to the present embodiment disposed on the fixed unit; and FIG. 39 is a perspective view illustrating the AF guide ball of the lens driving device according to the present embodiment disposed in the moving unit.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed unit **100**. The fixed unit **100** may be a part that is relatively fixed portion when the moving unit moves. The moving unit may move with respect to the fixed unit **100**.

The lens driving device **10** may comprise a base **110**. The fixed unit **110** may comprise the base **110**. The base **110** may be disposed below the AF carrier **210**. The base **110** may be disposed below the OIS carrier **310**. The base **110** may be coupled with the cover **120**. The AF carrier **210** and the OIS carrier **310** may be disposed on the base **110**. The AF carrier **210** and the OIS carrier **310** may be disposed on the lower plate unit of the base **110**. The AF carrier **210** and the OIS carrier **310** may be disposed inside the base **110**. The AF carrier **210** and the OIS carrier **310** may be disposed inside a side wall portion of the base **110**.

The base **110** may comprise a lower plate unit. The lower plate unit of the base **110** may support a lower surface of the AF moving unit **200**. The lower plate unit of the base **110** may support a lower surface of the AF carrier **210**.

The base **110** may comprise a pillar portion **111**. The pillar portion **111** may be extended from the upper surface of the lower plate unit. The pillar portion **111** may be disposed on the inner side of the outer wall portion **112**.

The base **110** may comprise a first guide that guides the AF guide ball **810** to move. The first guide may comprise an inner groove **111-1** of the base **110**. The first guide may comprise an outer groove **112-1** of the base **110**.

The base **110** may comprise an inner groove **111-1**. The pillar portion **111** may comprise an inner groove **111-1**. The inner groove **111-1** may be formed in the pillar portion **111**. The inner groove **111-1** may be an 'AF guide ball accommodating groove'. An AF guide ball **810** may be disposed in the inner groove **111-1**. An inner ball **811** may be disposed in the inner groove **111-1**. The inner groove **111-1** may be in direct contact with the AF guide ball **810**. The inner groove **111-1** may be disposed in an optical axis direction. The inner groove **111-1** may comprise a plurality of grooves. The inner groove **111-1** may comprise two grooves. The two grooves may be disposed parallel to each other.

The base **110** may comprise a step **111-2**. The step **111-2** may be formed on the pillar portion **111**. A plate member **910** may be disposed on the step **111-2**.

The base **110** may comprise an outer wall portion **112**. The outer wall portion **112** may be a 'side portion'. The outer wall portion **112** may be a 'side plate'. The outer wall portion **112** may be a 'side wall'. The outer wall portion **112** of the base **110** may be extended from the upper surface of the lower plate unit.

In the present embodiment, the pillar portion **111** of the base **110** and the outer wall portion **112** may be connected. Or, in a modified embodiment, the pillar portion **111** of the base **110** and the outer wall portion **112** may be spaced apart.

The base **110** may comprise an outer groove **112-1**. The outer wall portion **112** may comprise an outer groove **112-1**. The outer groove **112-1** may be formed to face the inner groove **111-1**. The outer groove **112-1** may be disposed to face the inner groove **111-1**. The outer groove **112-1** may be an 'AF guide ball accommodating groove'. An AF guide ball **810** may be disposed in the outer groove **112-1**. An outer ball **81** may be disposed in the outer groove **112-1**. The outer groove **112-1** may be in direct contact with the AF guide ball **810**. The outer groove **112-1** may be disposed in an optical axis direction. The outer groove **112-1** may comprise a plurality of grooves. The outer groove **112-1** may comprise two grooves. The two grooves may be disposed parallel to each other. The outer groove **112-1** may be disposed on the opposite side of the inner groove **111-1**. The outer groove **112-1** may be formed to have a shape corresponding to the inner groove **111-1**. The outer groove **112-1** and the inner groove **111-1** may be formed to have the same length in an optical axis direction.

The base **110** may comprise a groove **114**. The groove **114** may be formed in a portion protruding outwardly from the base **110**. The groove **114** may be recessed from the outer surface of the base **110**. A connecting portion **730** of the substrate **700** may be disposed in the groove **114**.

The base **110** may comprise a step. The step may be formed at the lower end portion of the outer side surface of the base **110**. The step may be protruded from the outer side surface of the base **110**. A side plate **122** of the cover **120** may be disposed on the step of the base **110**.

The lens driving device **10** may comprise a yoke **115**. The yoke **115** may be disposed in the base **110**. The yoke **115** may be disposed perpendicularly to the lower plate unit of the base **110**. The yoke **115** may be disposed to connect two adjacent pillar portions of the base **110**. A substrate **700** may be disposed on the yoke **115**. An outer portion **710** of the substrate **700** may be disposed on the yoke **115**. The yoke **115** may be disposed inside the cover **120**. The yoke **115** may be disposed parallel to an adjacent side plate **122** of the cover **120**.

The lens driving device **10** may comprise a cover **120**. The fixed unit **100** may comprise a cover **120**. The cover **120** may be disposed on the base **110**. The cover **120** may be disposed on the base **110**. The cover **120** may be coupled to the base **110**. The cover **120** may be fixed to the base **110**. The cover **120** may accommodate an AF carrier **210** therein. The cover **120** may accommodate an OIS carrier **310** therein. The cover **120** may be a shield member. The cover **120** may be a shield can.

The cover **120** may comprise an upper plate **121**. The upper plate **121** may be disposed in the moving unit. The upward movement of the moving unit may be limited when the moving unit is being in contact with the upper plate **121**.

The cover **120** may comprise a hole **121-1** being formed in the upper plate **121** so that light passes therethrough. The upper plate **121** of the cover **120** may comprise a hole **121-1** through which light passes. The hole **121-1** may be hollow. The hole **121-1** may be disposed at a position corresponding to the lens. The hole **121-1** may be disposed at a position corresponding to the image sensor **60**.

The cover **120** may comprise a hole **121-2** being formed in the upper plate **121**. The upper plate **121** may comprise a hole **121-2**. The hole **121-2** may be formed in the corner region of the upper plate. The hole **121-2** may be formed in two of the four corner regions of the upper plate. The hole **121-2** may be formed at a position corresponding to the AF guide ball **810** in an optical axis direction. The stopper member **130** may be coupled to the hole **121-2**. The protrusion **132** of the stopper member **130** may be inserted into the hole **121-2**. The hole **121-2** may be spaced apart from the hollow hole **121-1**.

In a modified embodiment, the hole **121-2** may be omitted, and the stopper member **130** may be coupled to a lower surface of the upper plate **121** of the cover **120**. That is, the stopper member **130** may be assembled with the cover **120** without a hole.

The cover **120** may comprise a recessed portion **121-3**. The upper plate **121** may comprise a recessed portion **121-3**. The recessed portion **121-3** may be formed convexly downward on the upper plate **121**. The recessed portion **121-3** may be formed concavely when viewed from above. The stopper member **130** may be disposed in a concave portion of the recessed portion **121-3**. At this time, the recessed depth of the recessed portion **121-3** may match the thickness of the stopper member **130** in the corresponding direction. Or, the recessed depth of the recessed portion **121-3** may be 90% to 110% of the thickness of the stopper member **130** in the corresponding direction. Or, the recessed depth of the recessed portion **121-3** may be 80% to 120% of the thickness of the stopper member **130** in the corresponding direction. The stopper member **130** may be disposed so as not to be protruded more than other portions of the upper plate **121** of the cover **120**.

The cover **120** may comprise a side plate **122**. The side plate **122** may be extended from the upper plate **121**. The side plate **122** may be disposed on the base **110**. The side plate **122** may be disposed on a step portion being protruded from a lower portion of an outer side surface of the base **110**. The side plate **122** may comprise a plurality of side plates. The side plate **122** may comprise four side plates. The side plate **122** may comprise a first side plate and a second side plate being disposed opposite to each other, and a third side plate and a fourth side plate being disposed opposite each other.

The lens driving device **10** may comprise a stopper member **130**. The stopper member **130** may be disposed in the cover **120**. The stopper member **130** may be coupled to the cover **120**. The stopper member **130** may be fixed to the cover **120**. The stopper member **130** may be bonded to the cover **120** with an adhesive. The stopper member **130** may be disposed on the upper plate **121** of the cover **120**. The stopper member **130** may be coupled to the upper plate **121** of the cover **120**. The stopper member **130** may be fixed to the upper plate **121** of the cover **120**. The stopper member **130** may be bonded to the upper plate **121** of the cover **120** with an adhesive. The stopper member **130** may be formed of a different material from the cover **120**. The cover **120** may be formed of metal. The stopper member **130** may be formed of an injection molded product. The present embodiment can prevent detachment of the AF guide ball **810** by avoiding difficult processing of the cover **120** and through simple assembly.

The stopper member **130** can limit the upward movement of the AF guide ball **810**. When the AF guide ball **810** moves upward the AF guide ball **810** can come into contact with the stopper member **130**. The length of the protrusion **132** of the stopper member **130** in an optical axis direction can be longer than the stroke length of the AF carrier **210**. Accordingly, even if the AF carrier **210** moves, the protrusion **132** of the stopper member **130** can be disposed on the rail between the base **110** and the AF carrier **210**. Accordingly, the upward separation of the AF guide ball **810** being disposed on the rail can be prevented.

The lower stopper of the AF guide ball **810** may be formed on the base **110**. The base **110** may comprise a protrusion being protruded upward from the lower plate unit. The protrusion of the base **110** may be disposed on a rail between the base **110** and the AF carrier **210**. That is, in an optical axis direction, the AF guide ball **810** may be disposed between the protrusion of the base **110** and the protrusion **132** of the stopper member **130**. The downward departure of the AF guide ball **810** being disposed on the rail may be prevented by the protrusion of the base **110**.

The distance in the optical axis direction between the protrusion **132** of the stopper member **130** and the protrusion of the base **110** may be longer than the length in an optical axis direction of the rail or groove formed in the AF carrier **210**. As the length of the rail along which the AF guide ball **810** moves increases, the AF guide ball **810** can roll over the entire stroke section of the AF carrier **210**.

In the present embodiment, the rail on which the AF guide ball **810** is disposed may be an 'open ball rail structure'. The upper and lower limits of movement of the AF guide ball **810** may be determined by the fixed unit **100** rather than by the AF moving unit **200**.

The stopper member **130** may comprise a body portion **131**. The body portion **131** may be disposed on the upper plate **121** of the cover **120**. The body portion **131** may be coupled to the upper plate **121** of the cover **120**. The body portion **131** may be fixed to the upper plate **121** of the cover **120**. The body portion **131** may be bonded to the upper plate **121** of the cover **120** with an adhesive. The body portion **131** may be disposed on an upper surface of the upper plate **121** of the cover **120**. The body portion **131** may be coupled to an upper surface of the upper plate **121** of the cover **120**.

The stopper member **130** may comprise a protrusion **132**. At least a portion of the protrusion **132** may be disposed on a rail on which the AF guide ball **810** moves. The protrusion **132** may be formed on a lower surface of the body portion **131**. The protrusion **132** may be extended from the body portion **131**. The protrusion **132** may be protruded from the body portion **131**. The protrusion **132** may be extended from the body portion **131** in an optical axis direction. The protrusion **132** may be extended downward from the body portion **131**. The protrusion **132** may pass through the hole **121-2** of the upper plate **121** of the cover **120**. The protrusion **132** may be inserted into the hole **121-2** of the upper plate **121** of the cover **120**. The protrusion **132** of the stopper member **130** may comprise two protrusions **132** being disposed in parallel on one body portion **131**. The protrusion **132** may be an extended portion. The protrusion **132** may be a protruded portion. The protrusion **132** may be a protrusion. The stopper member **130** may comprise an extension being disposed in a groove in which the AF guide ball **810** is disposed. The stopper member **130** may comprise a protrusion being disposed in a groove in which the AF guide ball **810** is disposed.

In a modified embodiment, the protrusion **132** may be formed integrally with the metal cover **120** rather than as a separate injection molded product. The protrusion **132** may be formed integrally with the upper plate **121** of the cover **120**. The protrusion **132** may be protruded downward from the upper plate **121** of the cover **120**. A corresponding groove may be formed on the opposite side of the protrusion **132**.

The stopper member **130** may comprise a protruded portion **133**. The protruded portion **133** may be formed on a lower surface of the body portion **131**. The protruded portion **133** may be protruded from the body portion **131**. The protruded portion **133** may be extended from the body portion **131**. The protruded portion **133** may be protruded from the body portion **131** in an optical axis direction. The protruded portion **133** may be protruded downward from the body portion **131**. The protruded portion **133** may connect two protrusions **132**.

The protrusion **132** may comprise a cylindrical shape. Or, the protrusion **132** may be formed in a polygonal pillar shape. The protrusion **132** may be formed in a pillar shape.

The lens driving device **10** may comprise a moving unit. The moving unit may be disposed in the fixed unit **100**. The moving unit may be disposed inside the fixed unit **100**. The moving unit may be disposed on the fixed unit **100**. The moving unit may be movably disposed in the fixed unit **100**. The moving unit may be moved relative to the fixed unit **100** by the driving unit. The moving unit may be moved during AF driving. The moving unit may be moved during OIS driving. A lens may be coupled to the moving unit.

The lens driving device **10** may comprise an AF moving unit **200**. The AF moving unit **200** may be disposed in the fixed unit **100**. The AF moving unit **200** may be disposed inside the fixed unit **100**. The AF moving unit **200** may be disposed on the fixed unit **100**. The AF moving unit **200** may be disposed between the fixed unit **100** and the OIS moving unit **300**. The AF moving unit **200** may be movably disposed in the fixed unit **100**. The AF moving unit **200** may be moved in an optical axis direction with respect to the fixed unit **100** by the AF driving unit **400**. The AF moving unit **200** may be moved during AF driving.

In a modified embodiment, the AF moving unit **200** and the AF driving unit **400** may be omitted. That is, the OIS moving unit **300** may be disposed on the fixed unit **100**. Or, the OIS moving unit **300** may be disposed on the fixed unit **100** and the AF moving unit **200** may be disposed inside the OIS moving unit **300**.

The lens driving device **10** may comprise an AF carrier **210**. The AF moving unit **200** may comprise an AF carrier **210**. The AF carrier **210** may be an 'AF holder'. The AF carrier **210** may be a 'housing'. The AF carrier **210** may be disposed inside the base **110**. The AF carrier **210** may be disposed on the base **110**. The AF carrier **210** may be disposed inside the cover **120**. The AF carrier **210** may be disposed between the base **110** and the OIS carrier **310**. The AF carrier **210** may be movably disposed in an optical axis direction.

The AF carrier **210** may comprise a frame, a first upper plate, and a second upper plate. At this time, the frame may be a body portion. The frame may be a holder member **220**. The first upper plate may be a horizontal reinforcing member **225**. The second upper plate may be a preload member **230**. The AF carrier **210** may be a housing. The housing may comprise a first housing and a second housing. At this time, the first housing may comprise a holder member **220** and the second housing may comprise a preload member **230**. The OIS carrier **310** may be a bobbin. The OIS guide ball **820** may be disposed between the housing and the bobbin. The AF guide ball **810** may be disposed between a side surface of the housing and a cover **120**. The AF guide ball **810** can be disposed between the side surface of the housing and the base or the pillar of the base.

The lens driving device **10** may comprise a holder member **220**. The AF carrier **210** may comprise a holder member **220**. The holder member **220** may be formed separately from the preload member **230**. A wire **850** may be coupled to the holder member **220**.

The AF carrier **210** may comprise a lower plate unit **221**. The lower plate unit **221** may be disposed below the OIS carrier **310**. The lower plate unit **221** may be disposed between the OIS carrier **310** and the base **110**. The lower plate unit **221** may be disposed between the **OIS** carrier **310** and the base **110** in an optical axis direction.

The AF carrier **210** may comprise a groove **222**. The groove **222** may be a 'preload member passage hole'. The holder member **220** may comprise a groove **222**.

The lower plate unit **221** of the holder member **220** may comprise a groove **222**. The groove **222** may be formed in the lower plate unit **221** of the holder member **220**. The groove **222** may be opened inwardly. The preload member **230** may be inserted into the groove **222**. The protruded portion **231** of the preload member **230** may be inserted into the groove **222**. The groove **222** may be formed as a hole. The groove **222** may be redisposed by a hole. That is, in a modified embodiment, the AF carrier **210** may comprise a groove **222** into which the protruded portion **231** of the preload member **230** is inserted.

The AF carrier **210** may comprise a side portion **223**. The side portion **223** may comprise a side wall. The side portion **223** may be extended from the lower plate unit **221**. The side portion **223** may be extended upwardly from the lower plate unit **221**. The side portion 223 may be extended from an edge of the lower plate unit **221**. An inner portion **720** of the substrate **700** may be disposed in the side portion **223**. An AF coil **420** may be disposed in the side portion **223**. An OIS-x coil **520** may be disposed in the side portion **223**. An OIS-y coil **620** may be disposed in the side portion **223**. The side portion **223** may comprise a groove for avoiding the coil. The side portion **223** may comprise a plurality of side portions. The side portion **223** may comprise four side portions. The side portion **223** may comprise a first side portion and a second side portion being disposed opposite to each other, and a third side portion and a fourth side portion being disposed opposite to each other.

The AF carrier **210** may comprise a second guide that guides the AF guide ball **810** to move. The second guide may comprise an inner groove **224-1** of the AF carrier **210**. The second guide may comprise an outer groove **224-2** of the AF carrier **210**.

The AF carrier **210** may comprise an inner groove **224-1**. The holder member **220** may comprise an inner groove **224-1**. The inner groove **224-1** may be an 'AF guide ball accommodating groove'. An AF guide ball **810** may be disposed in the inner groove **224-1**. An inner ball **811** may be disposed in the inner groove **224-1**. The inner groove **224-1** may be in direct contact with the AF guide ball **810**. The inner groove **224-1** may be disposed in an optical axis direction. The inner groove **224-1** may guide the AF guide ball **810** to move in an optical axis direction. The inner groove **224-1** may comprise a plurality of grooves. The inner groove **224-1** may comprise two grooves. The two grooves can be disposed parallel to each other. The two grooves can be disposed in a diagonal direction from each other with respect to the optical axis.

The AF carrier **210** may comprise an outer groove **224-2**. The holder member **220** may comprise an outer groove **224-2**. The outer groove **224-2** may be an 'AF guide ball accommodating groove'. An AF guide ball **810** may be disposed in the outer groove **224-2**. An outer ball **812** may be disposed in the outer groove **224-2**. The outer groove **224-2** may be in direct contact with the AF guide ball **810**. The outer groove **224-2** may be disposed in an optical axis direction. The outer groove **224-2** may guide the AF guide ball **810** to move in an optical axis direction. The outer groove **224-2** may comprise a plurality of grooves. The outer groove **224-2** may comprise two grooves. The two grooves can be disposed parallel to each other. The two grooves can be disposed in a diagonal direction from each other with respect to the optical axis. The outer groove **224-2** can be disposed opposite the inner groove **224-1**. The outer groove **224-2** can be formed to have a shape corresponding to the inner groove **224-1**. The outer groove **224-2** and the inner groove **224-1** can be formed to have the same length in an optical axis direction.

The AF carrier **210** may comprise a horizontal reinforcing member **225**. The holder member **220** may comprise a horizontal reinforcing member **225**. The holder member **220** may comprise a lower plate unit **221** having a horizontal reinforcing member **225**. The horizontal reinforcing member **225** may be disposed in the lower plate unit **221**. The horizontal reinforcing member **225** may be disposed in a direction perpendicular to the optical axis. The horizontal reinforcing member **225** may be formed of metal. The horizontal reinforcing member **225** may be a 'horizontal metal member'. The horizontal reinforcing member **225** may be disposed in the holder member **220**. The horizontal reinforcing member **225** may be insert-molded into the holder member **220**. A horizontal reinforcing member **225** can be disposed to reinforce the strength of the holder member **220**.

The horizontal reinforcing member **225** may comprise a hole. A wire **850** may be disposed in the hole. The wire **850** may pass through the hole of the horizontal reinforcing member **225**.

The horizontal reinforcing member **225** may comprise a first hole. The first hole may be disposed adjacent to the wire **850**. The first hole may be disposed adjacent to a hole through which the wire **850** passes. The first hole may be disposed adjacent to a conductive member that couples the wire **850** and the horizontal reinforcing member **225**. The conductive member that couples the wire **850** and the horizontal reinforcing member **225** may be introduced into the first hole. A solder that couples the wire **850** and the horizontal reinforcing member **225** may be introduced into the first hole. The first hole may be formed to have a curvature. The first hole may be formed in a U-shape when viewed from below. The first hole may comprise a curved shape when viewed from below.

The horizontal reinforcing member **225** may comprise a second hole. The second hole may be disposed adjacent to the wire **850**. The second hole may be disposed adjacent to a hole through which the wire **850** passes. The second hole may be disposed adjacent to a conductive member that couples the wire **850** and the horizontal reinforcing member **225**. The conductive member that couples the wire **850** and the horizontal reinforcing member **225** may be introduced into the second hole. The second hole may be disposed on the opposite side of the first hole with respect to the wire **850**. The second hole may be disposed on the opposite side of the first hole with respect to the hole of the horizontal reinforcing member **225** through which the wire **850** is disposed. A solder that couples the wire **850** and the horizontal reinforcing member **225** may be introduced into the second hole. The second hole may be extended straightly.

The horizontal reinforcing member **225** may comprise a groove. The OIS-x sensor **530** and the OIS-y sensor **630** may be disposed in the groove of the horizontal reinforcing member **225**. The OIS-x sensor **530** and the OIS-y sensor **630** may be disposed at positions corresponding to the groove of the horizontal reinforcing member **225**.

The horizontal reinforcing member **225** may comprise a body portion **225-1**. The body portion **225-1** may be disposed in the lower plate unit **221** of the AF carrier **210**. The body portion **225-1** may be coupled to the lower plate unit **221** of the AF carrier **210**. The body portion **225-1** may be fixed to the lower plate unit **221** of the AF carrier **210**. The body portion **225-1** may be integrally formed in the lower plate unit **221** of the AF carrier **210**. The body portion **225-1** may be insert-molded into the lower plate unit **221** of the AF carrier **210**.

The horizontal reinforcing member **225** may comprise a coupling portion **225-2**. The coupling portion **225-2** may be referred to as a 'first portion'. The coupling portion **225-2** may be overlapped with the coupling portion **226-2** of the vertical reinforcing member **226** in an optical axis direction. The coupling portion **225-2** may be coupled to the coupling portion **226-2** of the vertical reinforcing member **226**. The coupling portion **225-2** may be in contact with the coupling portion **226-2** of the vertical reinforcing member **226**. The coupling portion **225-2** of the horizontal reinforcing member **225** may be formed in a shape corresponding to the coupling portion **226-2** of the vertical reinforcing member **226**. The coupling portion **225-2** of the horizontal reinforcing member **225** may have a shape corresponding to the coupling portion **226-2** of the vertical reinforcing member **226**. The coupling portion **225-2** of the horizontal reinforcing member **225** may be protruded outwardly from the AF carrier **210**. The coupling portion **225-2** of the horizontal reinforcing member **225** may be protruded outwardly from the AF carrier **210** when viewed from above. An end of the coupling portion **225-2** of the horizontal reinforcing member **225** may be open outwardly. An end of the coupling portion **225-2** of the horizontal reinforcing member **225** may be open outwardly from the AF carrier **210**. The coupling portion **225-2** of the horizontal reinforcing member **225** may be a portion formed by cutting. The end of the coupling portion **225-2** of the horizontal reinforcing member **225** may be a portion formed by cutting. The end of the coupling portion **225-2** of the horizontal reinforcing member **225** may be formed by cutting.

The horizontal reinforcing member **225** may comprise a bent portion **225-3**. The bent portion **225-3** may be bent from the body portion **225-1**. The bent portion **225-3** may comprise a hook shape. The bent portion **225-3** of the horizontal reinforcing member **225** may be disposed on the side portion **223** of the AF carrier **210**. The horizontal reinforcing member **225** may be more firmly fixed to the AF carrier **210** by the bent portion **225-3**. The maximum width of the bent portion **225-3** may be larger than the width of the coupling portion **225-2**. Or, the maximum width of the bent portion **225-3** may be equal to the width of the coupling portion **225-2**. The protruding length of the bent portion **225-3** may be longer than the protruding length of the coupling portion **225-2**. Or, the protruding length of the bent portion **225-3** may be equal to the protruding length of the coupling portion **225-2**. The separation distance between the two bent portions **225-3** may be greater than the separation distance between the two coupling portions **225-2**.

The AF carrier **210** may comprise a vertical reinforcing member **226**. The holder member **220** may comprise a vertical reinforcing member **226**. The vertical reinforcing member **226** may be disposed in a direction parallel to an optical axis. The vertical reinforcing member **226** may be formed of metal. The vertical reinforcing member **226** may be a 'vertical metal member'. The vertical reinforcing member **226** may be disposed in the holder member **220**. The vertical reinforcing member **226** may be insert-molded into the holder member **220**. The vertical reinforcing member **226** may be disposed to reinforce the strength of the holder member **220**.

The horizontal reinforcing member **225** can be in contact with the vertical reinforcing member **226**. The horizontal reinforcing member **225** can be partially in contact with the vertical reinforcing member **226**. The horizontal reinforcing member **225** can comprise a portion being in contact with the vertical reinforcing member **226**. The vertical reinforcing member **226** can comprise a portion being in contact with the horizontal reinforcing member **225**.

The horizontal reinforcing member **225** can be fixed to the vertical reinforcing member **226** by bonding. The horizontal reinforcing member **225** can be fixed to the vertical reinforcing member **226** by bonding. The coupling portion **225-2** of the horizontal reinforcing member **225** can be fixed to the vertical reinforcing member **226** by bonding. The horizontal reinforcing member **225** can be welded to the vertical reinforcing member **226**. The coupling portion **225-2** of the horizontal reinforcing member **225** can be welded to the vertical reinforcing member **226**. The horizontal reinforcing member **225** can be electrically coupled to the vertical reinforcing member **226**. The horizontal reinforcing member **225** can be electrically connected to the vertical reinforcing member **226**. The horizontal reinforcing member **225** can be conductively connected to the vertical reinforcing member **226**. The horizontal reinforcing member **225** can be electrically connected to the vertical reinforcing member **226**. The horizontal reinforcing member **225** can be connected to the vertical reinforcing member **226** by soldering.

The coupling portion **226-2** of the vertical reinforcing member **226** can be fixed to the horizontal reinforcing member **225** by bonding. The coupling portion **226-2** of the vertical reinforcing member **226** can be welded to the horizontal reinforcing member **225**.

The vertical reinforcing member **226** may comprise a body portion **226-1**. The body portion **226-1** may be disposed parallel to the optical axis. The body portion **226-1** may be disposed on a side portion **223** of the AF carrier **210**. The body portion **226-1** may be coupled to the side portion **223** of the AF carrier **210**. The body portion **226-1** may be fixed to the side portion **223** of the AF carrier **210**. The body portion **226-1** may be integrally formed on the side portion **223** of the AF carrier **210**. The body portion **226-1** may be insert-molded on the side portion **223** of the AF carrier **210**.

The vertical reinforcing member **226** may comprise a coupling portion **226-2**. The coupling portion **226-2** may be referred to as a 'second portion'. Or, one of the coupling portion **225-2** and the coupling portion **226-2** may be referred to as a 'first portion' and the other may be referred to as a 'second portion'. The coupling portion **226-2** may be bent from the body portion **226-1**. The coupling portion **226-2** may be bent from the lower end of the body portion **226-1**. The coupling portion **226-2** may be bent from the lower end of the body portion **226-1**. The coupling portion **226-2** may be bent from a part of the body portion **226-1**. The coupling portion **226-2** may overlap the horizontal reinforcing member (226) in the optical axis direction. The coupling portion **226-2** can be coupled with the coupling portion **225-2** of the horizontal reinforcing member (**225**). The coupling portion **226-2** can be in contact with the coupling portion **225-2** of the horizontal reinforcing member **225**. The coupling portion **226-2** can be in direct contact with the coupling portion **225-2** of the horizontal reinforcing member **225**. The coupling portion **226-2** can be in indirect contact with the coupling portion **225-2** of the horizontal reinforcing member **225**. The coupling portion **226-2** can be in contact with the coupling portion **225-2** of the horizontal reinforcing member **225** by a conductive member, welding, or soldering. The coupling portion **226-2** of the vertical reinforcing member **226** can be protruded outwardly from the AF carrier **210**. The coupling portion **226-2** of the vertical reinforcing member **226** may be protruded outwardly from the AF carrier **210** when viewed from above. An end of the coupling portion **226-2** of the vertical reinforcing member **226** may be opened outwardly. An end of the coupling portion **226-2** of the vertical reinforcing member **226** may be opened outwardly of the AF carrier **210**. The coupling portion **226-2** of the vertical reinforcing member **226** may be a portion formed by cutting. An end of the coupling portion **226-2** of the vertical reinforcing member **226** may be a portion formed by cutting. An end of the coupling portion **226-2** of the vertical reinforcing member **226** may be formed by cutting.

The AF carrier **210** may comprise a groove **227**. The holder member **220** may comprise a groove **227**. The groove **227** may be formed on an outer side surface of the AF carrier **210**. The groove **227** may be formed in a portion being protruded outwardly from the AF carrier **210**. A portion of the substrate **700** may be disposed in the groove **227**. A portion of the substrate **700** may be inserted into the groove **227**. The groove **227** may have a shape corresponding to the third bent portion **733** at least in a portion. The third bent portion **723** of the substrate **700** may be disposed in the groove **227**. The third bent portion **723** of the substrate **700** may be inserted into the groove **227**.

The lens driving device **10** may comprise a preload member **230**. The AF carrier **210** may comprise the preload member **230**. The preload member **230** may be coupled to an upper surface of the holder member **220**. The preload member **230** may be coupled to the holder member **220**. The preload member **230** may be inserted into the holder member **220** from the upper side and coupled thereto. The preload member **230** may pressurize the OIS guide ball **820**. The preload member **230** may be in contact with the OIS guide ball **820**. The preload member **230** may be in direct contact with the OIS guide ball **820**. The preload member **230** may be coupled to the holder member **220** and pressurize the OIS guide ball **820**. The preload member **230** can pressurize a part of the elastic member **830** by contacting the OIS guide ball **820**.

The preload member **230** may be disposed between the AF moving unit **200** and the base **110** in the optical axis direction. The preload member **230** may be disposed between the AF moving unit **200** and the base **110**. The preload member **230** may be disposed between the AF carrier **210** and the base **110**.

The AF carrier **210** may comprise a protruded portion **231**. The preload member **230** may comprise a protruded portion **231**. The protruded portion **231** may be a 'protrusion'. The preload member **230** may have a protruded portion **231** that guides the OIS guide ball **820**. The protruded portion **231** may be coupled to a groove **222** of the holder member **220**. The protruded portion **231** of the preload member **230** may be inserted into the groove **222** of the holder member **220** from below. The protruded portion **231** of the preload member **230** may be disposed in the groove **222** of the holder member **220**. At least a portion of the protruded portion **231** of the preload member **230** may be disposed in the groove **222** of the holder member **220**. The protruded portion **231** may comprise a plurality of protrusions. The protruded portion **231** may comprise four protrusions.

The AF carrier **210** may comprise a groove **232**. The preload member **230** may comprise a groove **232**. The groove **232** may be an 'OIS guide ball accommodating groove'. The groove **232** may be formed in the protruded portion **231**. The groove **232** may be formed on an upper surface of the protruded portion **231**. The groove **232** may be formed on an end of the protruded portion **231**. The groove **232** may be concavely formed on an upper surface of the protruded portion **231**. An OIS guide ball **820** may be disposed in the groove **232**. The OIS guide ball **820** may come into contact with the groove **232**.

The preload member **230** may comprise a body portion **233**. The body portion **233** may be coupled to the holder member **220**. The body portion **233** may be disposed on the lower surface of the holder member **220**. The protruded portion **231** may protrude upward from the body portion **233**.

The lens driving device **10** may comprise a cover **240**. The AF moving unit **200** may comprise a cover **240**. The cover **240** may be coupled to an AF carrier **210**. The cover **240** may be coupled to an upper surface of the AF carrier **210**. The cover **240** may be coupled to an upper side of the AF carrier **210**. The cover **240** may be coupled to an upper side of the holder member **220**. The cover **240** may comprise a hook. The hook of the cover **240** may be coupled to the AF carrier **210**. The hook of the cover **240** may be protruded downward and be coupled to a side surface of the AF carrier **210**.

The lens driving device **10** may comprise an OIS moving unit **300**. The OIS moving unit **300** may be disposed in the fixed unit **100**. The OIS moving unit **300** may be disposed inside the fixed unit **100**. The OIS moving unit **300** may be disposed on the fixed unit **100**. The OIS moving unit **300** may be disposed inside the AF moving unit **200**. The OIS moving unit **300** may be disposed to be movable. The OIS moving unit **300** may move in a direction perpendicular to the optical axis with respect to the fixed unit **100** and the AF moving unit **200** by the OIS driving unit. The OIS moving unit **300** may move in an x-axis direction by the OIS-x driving unit **500**. The OIS moving unit **300** may move in a y-axis direction by the OIS-y driving unit **600**. The OIS moving unit **300** can move during OIS driving.

The OIS moving unit **300** may comprise a first side surface and a second side surface being disposed on opposite sides, and a third side surface and a fourth side surface being disposed on opposite sides. The OIS-x magnet **510** may be disposed on the first side surface of the OIS moving unit **300**. The AF magnet **410** may be disposed on the third side surface of the OIS moving unit **300** or may be disposed to face the third side surface. That is, the AF magnet **410** may be disposed at a position corresponding to the third side surface of the OIS moving unit **300**. The AF magnet **410** may be disposed closest to the third side surface among the first to fourth side surfaces of the OIS moving unit **300**. The OIS-y magnet **610** may be disposed on the fourth side surface of the OIS moving unit **300**.

The lens driving device **10** may comprise an OIS carrier **310**. The OIS moving unit **300** may comprise an OIS carrier **310**. The OIS carrier **310** may be an 'OIS holder'. The OIS carrier **310** may be a 'bobbin'. The OIS carrier **310** may be disposed inside the AF carrier **210**. The OIS carrier **310** may be disposed inside the base **110**. The OIS carrier **310** may be disposed on the base **110**. The OIS carrier **310** may be disposed inside the cover **120**. The OIS carrier **310** may be movably disposed in a direction perpendicular to the optical axis.

The OIS carrier **310** may comprise an outer side surface. The OIS carrier **310** may comprise a plurality of side surfaces. The OIS carrier **310** may comprise a first side surface and a second side surface being disposed opposite to each other, and a third side surface and a fourth side surface being disposed opposite to each other. The AF coil **420** may be disposed between the first side surface of the OIS carrier **310** and the AF magnet **410**. The OIS-x magnet **510** may be disposed on a third side surface of the OIS carrier **310**. The OIS-y magnet **610** may be disposed on a second side surface of the OIS carrier **310**.

The OIS carrier **310** may comprise a groove. The groove may be an 'elastic member interference prevention groove'. The groove may be formed on an upper surface of the OIS carrier **310**. The groove may be formed concavely on an upper surface of the OIS carrier **310**. The groove may be disposed at a position corresponding to the elastic member **830** to prevent interference between the OIS carrier **310** and the elastic member **830**.

The OIS carrier **310** may comprise a groove **311**. The groove **311** may be an 'OIS guide ball accommodating groove'. An OIS guide ball **820** may be disposed in the groove **311**. The groove **311** may be in direct contact with the OIS guide ball **820**. The groove **311** may be concavely formed on a lower surface of the OIS moving unit **300**. The groove **311** may be concavely formed on a lower surface of the OIS carrier **310**. The groove **311** may be disposed in a direction perpendicular to an optical axis. The groove **311** may be recessed in an optical axis direction. The groove **311** may comprise a plurality of grooves. The groove **311** may comprise four grooves. The groove **311** may be formed on a lower surface of the OIS carrier **310**.

The OIS carrier **310** may comprise a lateral stopper. The lateral stopper may limit the lateral stroke of the OIS carrier **310**. That is, when the OIS carrier **310** moves to the maximum, the lateral stopper of the lower surface OIS carrier **310** may be in contact with at least one of the AF carrier **210** and the base **110**. The lateral stopper may be formed on an outer side surface of the OIS carrier **310**. The lateral stopper may be protruded outwardly from a side surface of the OIS carrier **310**.

The OIS carrier **310** may comprise a protrusion **312**. The protrusion **312** may be coupled with an elastic member **830**. The protrusion **312** may be a 'coupling protrusion'. The elastic member **830** may comprise a hole into which the protrusion **312** of the OIS carrier **310** is inserted. The protrusion **312** may be formed on an upper surface of the OIS carrier **310**.

The OIS carrier **310** may comprise a hole **313**. The hole (313) may be hollow. A lens may be coupled to the hole **313**. The central axis of the hole **313** may coincide with an optical axis of the lens. The central axis of the hole **313** may coincide with the optical axis.

The OIS carrier **310** may comprise a groove. The groove may be a 'lens adhesive accommodating groove'. The groove may be formed on an inner surface of the OIS carrier **310**. The groove may be concavely formed on an inner surface of the OIS carrier **310**. An adhesive may be injected between the lens and the OIS carrier **310** through the groove. An adhesive for bonding the lens and the OIS carrier **310** may be disposed in the groove.

The OIS carrier **310** may comprise a mounting portion. The mounting portion may be a 'magnet mounting portion'. Magnets **510** and **620** may be disposed in the mounting portion. The mounting portion may be formed as a groove, for example.

The lens driving device **10** may comprise a driving unit. The driving unit may move the moving unit with respect to the fixed unit **100**. The driving unit may comprise an AF driving unit **400**. The driving unit may comprise an OIS driving unit. The driving unit may comprise an OIS-x driving unit **500**. The driving unit may comprise an OIS-y driving unit **600**. The driving unit may comprise a coil and a magnet.

The lens driving device **10** may comprise an AF driving unit **400**. The AF driving unit **400** may move the AF moving unit **200** in an optical axis direction. The AF driving unit **400** may move the AF carrier **210** in an optical axis direction. The AF driving unit **400** may move the AF carrier **210** in the optical axis direction through electromagnetic force. The AF driving unit **400** may comprise a coil and a magnet.

The lens driving device **10** may comprise an AF magnet **410** and an AF coil **420** that move the AF moving unit **200** in an optical axis direction.

In the present embodiment, the AF carrier **210** and the OIS carrier **310** can move in an optical axis direction by the interaction between the AF coil **420** and the AF magnet **410**. The AF coil **420**, the AF carrier **210**, and the OIS carrier **310** can move in an optical axis direction as one unit.

The lens driving device **10** may comprise an AF magnet **410**. The AF driving unit **400** may comprise an AF magnet **410**. The AF magnet **410** may be an 'AF magnet'. The AF magnet **410** may be a permanent magnet. The AF magnet **410** may be disposed in the fixed unit **100**. The AF magnet **410** may be disposed in the base **110**. The AF magnet **410** may be disposed in the cover **120**. The AF magnet **410** may be disposed in the side plate **122** of the cover **120**. The AF magnet **410** may be disposed on an outer side surface of the base **110**. The AF magnet **410** may be disposed on an inner side surface of the base **110**. The AF magnet **410** may be fixed to the base **110**. The AF magnet **410** can be coupled to the base **110**. The AF magnet **410** can be bonded to the base **110** with an adhesive. The AF magnet **410** can be disposed inside the cover **120**. The AF magnet **410** can interact with the AF coil **420**. The AF magnet **410** can electromagnetically interact with the AF coil **420**. The AF magnet **410** can be disposed at a position corresponding to the AF coil **420**. The AF magnet **410** can face the AF coil **420**. The AF magnet **410** can face the AF coil **420**. The AF magnet **410** can be overlapped with the AF coil **420** in a direction perpendicular to the optical axis.

The AF magnet **410** may be a four-pole magnet. The AF magnet **410** may comprise a four-pole magnetizing magnet. The AF magnet **410** may comprise a first magnet portion comprising a N pole and a S pole, and a second magnet portion comprising a N pole and a S pole. The first magnet portion and the second magnet portion may be disposed in a vertical direction. The first magnet portion and the second magnet portion may be spaced apart from each other in a vertical direction, and a neutral portion may be disposed between the first magnet portion and the second magnet portion.

The lens driving device **10** may comprise an AF coil **420**. The AF driving unit **400** may comprise an AF coil **420**. The AF coil **420** may interact with an AF magnet **410**. The AF coil **420** may face the AF magnet **410**. The AF coil **420** may be disposed at a position corresponding to the AF magnet **410**. The AF coil **420** may be overlapped with the AF magnet **410** in a direction perpendicular to the optical axis. The AF coil **420** may be disposed on a substrate **700**. The AF coil **420** may be disposed on an inner portion **720** of the substrate **700**. The AF coil **420** may be disposed on an AF carrier **210**. The AF coil **420** can be disposed in the AF moving unit **200**.

In the present embodiment, the AF coil **420** can move in an optical axis direction. The AF coil **420** can move in an optical axis direction through interaction with the AF magnet **410** (see **A** of FIG. 42). The AF coil **420** can move together with the AF moving unit **200**. The AF coil **420** can move in an optical axis direction together with the AF moving unit **200**. During the AF driving process, the AF coil **420** can move in an optical axis direction together with the AF moving unit **200**. The AF coil **420** can be disposed in the AF moving unit **200**. The AF coil **420** can be fixed to the AF moving unit **200**. The AF coil **420** can be coupled to the AF moving unit **200**.

The lens driving device **10** may comprise an AF sensor **430**. The AF driving unit **400** may comprise an AF sensor **430**. The AF sensor **430** may be a Hall sensor. The AF sensor **430** may be disposed on a substrate **700**. The AF sensor **430** may be disposed on an inner portion **720** of the substrate **700**. The AF sensor **430** may detect an AF magnet **410**. The AF sensor **430** may detect movement of the AF magnet **410**. The movement amount or position of the AF magnet **410** detected by the AF sensor **430** may be used for feedback of auto focus driving.

The AF sensor **430** may be a driver IC. The driver IC may comprise a sensing unit. The sensing unit may comprise a Hall element (Hall IC). The driver IC may be electrically connected to the AF coil **420**. The driver IC may supply current to the AF coil **420**.

The AF sensor **430** may be disposed within the AF coil **420**. The AF sensor **430** may be overlapped with the neutral portion of the AF magnet **410** in a direction perpendicular to the optical axis. In a modified embodiment, the AF sensor **430** may be disposed on an outside of the AF coil **420**. The AF sensor **430** may be overlapped with the AF coil **420** in an optical axis direction. The AF sensor **430** may be overlapped with the AF coil **420** in a direction perpendicular to the optical axis.

The lens driving device **10** may comprise a yoke **440**. The AF driving unit **400** may comprise a yoke **440**. The yoke **440** may be disposed on an outer side surface of an AF magnet **410**. The yoke **440** may be disposed in a base **110**. The yoke **440** may be disposed on a side plate **122** of a cover **120**. The yoke **440** may be disposed between the AF magnet **410** and the side plate **122** of the cover **120**.

The lens driving device **10** may comprise an OIS driving unit. The OIS driving unit may move the OIS moving unit **300** in a direction perpendicular to the optical axis direction. The OIS driving unit may move the OIS carrier **310** in a direction perpendicular to the optical axis direction. The OIS driving unit may move the OIS carrier **310** in a direction perpendicular to the optical axis direction. The OIS driving unit may move the OIS carrier **310** in a direction perpendicular to the optical axis direction through electromagnetic force.

The lens driving device **10** may comprise an OIS-x driving unit **500**. The OIS driving unit may comprise an OIS-x driving unit **500**. The OIS-x driving unit **500** may move the OIS carrier **310** in an x-axis direction perpendicular to the optical axis. The OIS-x driving unit **500** may move the OIS carrier **310** in an x-axis direction perpendicular to the optical axis through electromagnetic force. The OIS-x driving unit **500** may comprise a coil and a magnet.

The lens driving device **10** may comprise an OIS-x magnet **510** and an OIS-x coil **520** that move the OIS moving unit **300** in an x-axis direction perpendicular to the optical axis direction.

In the present embodiment, the OIS-x magnet **510** and the OIS-x coil **520** can move the OIS moving unit **300** in a first direction perpendicular to the optical axis direction. At this time, the first direction may be an x-axis direction. The OIS carrier **310** can move in an x-axis direction perpendicular to the optical axis direction by the interaction between the OIS-x coil **520** and the OIS-x magnet **510**. The OIS-x magnet **510** and the OIS carrier **310** can move in an x-axis direction as one unit.

The lens driving device **10** may comprise an OIS-x magnet **510**. The OIS driving unit may comprise an OIS-x magnet **510**. The OIS-x magnet **510** may be an 'OIS-x magnet'. The OIS-x magnet **510** may be a permanent magnet. The OIS-x magnet **510** may be disposed in the OIS moving unit **300**. The OIS-x magnet **510** may be spaced apart from the AF magnet **410**. The OIS-x magnet **510** may be disposed in the OIS carrier **310**. The OIS-x magnet **510** may be disposed on an outer side surface of the OIS carrier **310**. The OIS-x magnet **510** may be fixed to the OIS carrier **310**. The OIS-x magnet **510** may be coupled to the OIS carrier **310**. The OIS-x magnet **510** can be bonded to the OIS carrier **310** with an adhesive. The OIS-x magnet **510** can be disposed inside the cover **120**. The OIS-x magnet **510** can interact with the OIS-x coil **520**. The OIS-x magnet **510** can electromagnetically interact with the OIS-x coil **520**. The OIS-x magnet **510** can be disposed at a position corresponding to the OIS-x coil **520**. The OIS-x magnet **510** can face the OIS-x coil **520**. The OIS-x magnet **510** can face the OIS-x coil **520**. The OIS-x magnet **510** can be overlapped with the OIS-x coil **520** in a direction perpendicular to the optical axis. The OIS-x magnet **510** can be overlapped with the OIS-x coil **520** in an x-axis direction. The OIS-x magnet **510** can move in an x-axis direction perpendicular to the optical axis.

The OIS-x magnet **510** can move in the pushing and pulling direction with the OIS-x coil **520** through interaction with the OIS-x coil **520**.

The OIS-x magnet **510** may be a two-pole magnet. The OIS-x magnet **510** may comprise a two-pole magnetizing magnet. The OIS-x magnet **510** may comprise an N pole and an S pole.

The lens driving device **10** may comprise an OIS-x coil **520**. The OIS driving unit may comprise an OIS-x coil **520**. The OIS-x coil **520** may interact with an OIS-x magnet **510**. The OIS-x coil **520** may move the OIS-x magnet **510** in an x-axis direction perpendicular to the optical axis. The OIS-x coil **520** may move the OIS-x magnet **510** in an x-axis direction through interaction with the OIS-x magnet **510**. The OIS-x coil **520** may face the OIS-x magnet **510**. The OIS-x coil **520** may be disposed at a position corresponding to the OIS-x magnet **510**. The OIS-x coil **520** may be overlapped with the OIS-x magnet **510** in a direction perpendicular to the optical axis. The OIS-x coil **520** may be disposed on the substrate **700**. The OIS-x coil **520** may be disposed on the inner portion **720** of the substrate **700**. The OIS-x coil **520** may be disposed on the AF carrier **210**.

In the present embodiment, the OIS-x coil **520** can move together with the AF moving unit **200**. The OIS-x coil **520** can move in an optical axis direction together with the AF moving unit **200**. During the AF driving process, the OIS-x coil **520** can move in an optical axis direction together with the AF moving unit **200**. The OIS-x coil **520** can be disposed in the AF moving unit **200**. The OIS-x coil **520** can be fixed to the AF moving unit **200**. The OIS-x coil **520** can be coupled to the AF moving unit **200**.

When a current is applied to the OIS-x coil **520**, the OIS-x magnet **510** can move away from or closer to the OIS-x coil **520** in an x-axis direction.

The lens driving device **10** may comprise an OIS-x sensor **530**. The OIS driving unit may comprise an OIS-x sensor **530**. The OIS-x sensor **530** may be disposed on a substrate **700**. The OIS-x sensor **530** may be disposed on an inner portion **720** of the substrate **700**. The OIS-x sensor **530** may comprise a Hall sensor. The OIS-x sensor **530** may detect an OIS-x magnet **510**. The OIS-x sensor **530** may detect a magnetic force of the OIS-x magnet **510**. The OIS-x sensor **530** may be disposed on a lower side of the OIS-x magnet **510**. The OIS-x sensor **530** may be overlapped with the OIS-x magnet **510** in an optical axis direction. In a modified embodiment, the OIS-x sensor **530** can be disposed inside the OIS-x coil **520**. The OIS-x sensor **530** can be overlapped with the OIS-x coil **520** in an optical axis direction. The OIS-x sensor **530** can be overlapped with the OIS-x coil **520** in a direction perpendicular to the optical axis. The OIS-x sensor **530** can face the OIS-x magnet **510**. The OIS-x sensor **530** can be disposed at a position corresponding to the OIS-x magnet **510**. The OIS-x sensor **530** can detect the movement of the OIS-x magnet **510**. The amount of movement or position of the OIS-x magnet **510** detected by the OIS-x sensor **530** can be used for feedback of the hand shake correction driving in an x-axis direction.

The lens driving device **10** may comprise an OIS-y driving unit **600**. The OIS driving unit may comprise an OIS-y driving unit **600**. The OIS-y driving unit **600** may move the OIS carrier **310** in a y-axis direction perpendicular to both the optical axis and the x-axis direction. The OIS-y driving unit **600** may move the OIS carrier **310** in a y-axis direction perpendicular to both the optical axis and the x-axis direction through electromagnetic force. The OIS-y driving unit **600** may comprise a coil and a magnet.

The lens driving device **10** may comprise an OIS-y magnet **610** and an OIS-y coil **620** that move the OIS moving unit **300** in a y-axis direction perpendicular to the optical axis direction and the x-axis direction.

In the present embodiment, the OIS-y magnet **610** and the OIS-y coil **620** can move the OIS moving unit **300** in a second direction that is perpendicular to the optical axis direction and the first direction. In the present embodiment, the OIS-y magnet **610** and the OIS-y coil **620** can move the OIS moving unit **300** in a second direction that is perpendicular to the optical axis direction and intersects the first direction. At this time, the second direction may be the y-axis direction. By the interaction of the OIS-y coil **620** and the OIS-y magnet **610**, the OIS carrier **310** can move in a y-axis direction that is perpendicular to both the optical axis direction and the x-axis direction. The OIS-y magnet **610** and the OIS carrier **310** can move integrally in a y-axis direction. The OIS-y magnet **610** can overlap with the AF magnet **410** in a second direction. The OIS-y magnet **610** can be overlapped with the AF magnet **410** in a y-axis direction.

The lens driving device **10** may comprise an OIS-y magnet **610**. The OIS-y driving unit **600** may comprise an OIS-y magnet **610**. The OIS-y magnet **610** may be an 'OIS-y magnet'. The OIS-y magnet **610** may be a permanent magnet. The OIS-y magnet **610** may be disposed in the OIS moving unit **300**. The OIS-y magnet **610** may be spaced apart from the OIS-x magnet **510**. The OIS-y magnet **610** may be spaced apart from the AF magnet **410**. The OIS-y magnet **610** may be disposed in the OIS carrier **310**. The OIS-y magnet **610** may be disposed on an outer side surface of the OIS carrier **310**. The OIS-y magnet **610** can be fixed to the OIS carrier **310**. The OIS-y magnet **610** can be coupled to the OIS carrier **310**. The OIS-y magnet **610** can be bonded to the OIS carrier **310** with an adhesive. The OIS-y magnet **610** can be disposed inside the cover **120**. The OIS-y magnet **610** can interact with the OIS-y coil **620**. The OIS-y magnet **610** can electromagnetically interact with the OIS-y coil **620**. The OIS-y magnet **610** can be disposed at a position corresponding to the OIS-y coil **620**. The OIS-y magnet **610** can face the OIS-y coil **620**. The OIS-y magnet **610** can face the OIS-y coil **620**. The OIS-y magnet **610** can be overlapped with the OIS-y coil **620** in a direction perpendicular to the optical axis. The OIS-y magnet **610** can be overlapped with the OIS-y coil **620** in a y-axis direction. The OIS-y magnet **610** can move in a y-axis direction.

The OIS-y magnet **610** can move in the pushing and pulling direction of the OIS-y coil **620** through interaction with the OIS-y coil **620**.

The OIS-y magnet **610** may be a two-pole magnet. The OIS-y magnet **610** may comprise a two-pole magnetizing magnet. The OIS-y magnet **610** may comprise an N pole and an S pole.

The lens driving device **10** may comprise an OIS-y coil **620**. The OIS-y driving unit **600** may comprise the OIS-y coil **620**. The OIS-y coil **620** may interact with the OIS-y magnet **610**. The OIS-y coil **620** may be disposed on an opposite side of the AF coil **420** with respect to an optical axis. The OIS-y coil **620** may move the OIS-y magnet **610** in a y-axis direction, which is perpendicular to both the optical axis and the x-axis. The OIS-y coil **620** may move the OIS-y magnet **610** in a y-axis direction through interaction with the OIS-y magnet **610**. The OIS-y coil **620** may face the OIS-y magnet **610**. The OIS-y coil **620** can face the OIS-y magnet **610**. The OIS-y coil **620** can be disposed at a position corresponding to the OIS-y magnet **610**. The OIS-y coil **620** can be overlapped with the OIS-y magnet **610** in a direction perpendicular to the optical axis. The OIS-y coil **620** can be disposed on the substrate **700**. The OIS-y coil **620** can be disposed on the inner portion **720** of the substrate **700**. The OIS-y coil **620** can be disposed on the AF carrier **210**.

In the present embodiment, the OIS-y coil **620** can move together with the AF moving unit **200**. The OIS-y coil **620** can move in an optical axis direction together with the AF moving unit **200**. During the AF driving process, the OIS-y coil **620** can move in an optical axis direction together with the AF moving unit **200**. The OIS-y coil **620** can be disposed in the AF moving unit **200**. The OIS-y coil **620** can be fixed to the AF moving unit **200**. The OIS-y coil **620** can be coupled to the AF moving unit **200**.

When a current is applied to the OIS-y coil **620**, the OIS-y magnet **610** can move away from or closer to the OIS-y coil **620** in a y-axis direction.

The lens driving device **10** may comprise an OIS-y sensor **630**. The OIS-y driving unit **600** may comprise an OIS-y sensor **630**. The OIS-y sensor **630** may be disposed on a substrate **700**. The OIS-y sensor **630** may be disposed on an inner portion **720** of the substrate **700**. The OIS-y sensor **630** may comprise a Hall sensor. The OIS-y sensor **630** may detect an OIS-y magnet **610**. The OIS-y sensor **630** may detect a magnetic force of the OIS-y magnet **610**. The OIS-y sensor **630** may be disposed on a lower side of the OIS-y magnet **610**. The OIS-y sensor **630** may be overlapped with the OIS-y magnet **610** in an optical axis direction. The OIS-y sensor **630** may be overlapped with the OIS-y magnet **610** in a direction perpendicular to the optical axis. In a modified embodiment, the OIS-y sensor **630** may be disposed inside the OIS-y coil **620**. The OIS-y sensor **630** may be overlapped with the OIS-y coil **620** in an optical axis direction. The OIS-y sensor **630** may face the OIS-y magnet **610**. The OIS-y sensor **630** may be disposed at a position corresponding to the OIS-y magnet **610**. The OIS-y sensor **630** may detect movement of the OIS-y magnet **610**. The amount of movement or position of the OIS-y magnet **610** detected by the OIS-y sensor **630** can be used for feedback of the hand shake correction driving in a y-axis direction.

When viewed from above, the AF magnet **410**, the AF coil **420**, the OIS-y magnet **610**, and the OIS-y coil **620** can be disposed in order on a virtual straight line. When viewed from above, the AF magnet **410**, the AF coil **420**, the OIS-y magnet **610**, and the OIS-y coil **620** can be disposed in order on a virtual straight line. When viewed from above, the AF magnet **410**, the AF coil **420**, the OIS-y magnet **610**, and the OIS-y coil **620** can be disposed in order. When viewed from above, the AF magnet **410**, the AF coil **420**, the OIS-y magnet **610**, and the OIS-y coil **620** can be disposed in order in a y-axis direction. When viewed from above, the AF magnet **410**, the AF coil **420**, the OIS-y magnet **610**, and the OIS-y coil **620** can be overlapped in a y-axis direction.

The lens driving device **10** may comprise a substrate **700**. The substrate **700** may comprise a flexible printed circuit board (FPCB). The substrate **700** may be electrically connected to coils **420**, **520**, and **620**. The substrate **700** may be electrically connected to sensors **430**, **530**, and **630**.

The substrate **700** may comprise an outer portion **710**. The outer portion **710** may be disposed on the base **110**. The outer portion **710** may be disposed on one side surface of the base **110**. The outer portion **710** may comprise two terminal portions. The two terminal portions may be disposed together on one side surface of the base **110**. The terminal portion may comprise a terminal **711**.

The substrate **700** may comprise a terminal **711**. The outer portion **710** may comprise a terminal **711**. The terminal **711** may be disposed at a lower end of the base **110**. The terminal **711** may be coupled to a printed circuit board **50**. The terminal **711** may be coupled to a terminal of the printed circuit board **50** through solder. The terminal **711** may be coupled to a terminal of the printed circuit board **50** through a conductive member. The terminal **711** may be connected to a terminal of the printed circuit board **50**. The terminal **711** may be electrically connected to the terminal of the printed circuit board **50**. The terminal **711** may be disposed on only one of the four side surfaces of the base **110**. In a modified embodiment, the terminal **711** can be disposed on any two of the four side surfaces of the base **110**.

The substrate **700** may comprise a hole **712**. The outer portion **710** may comprise a hole **712**. The hole **712** may be formed through the outer portion **710** of the substrate **700**. The hole **712** may comprise a plurality of holes.

The substrate **700** may comprise an inner portion **720**. The inner portion **720** may be disposed on the AF carrier **210**. The inner portion **720** may be coupled to the AF carrier **210**. The inner portion **720** may move together with the AF carrier **210**. The inner portion **720** may comprise a lower plate unit **721** coupled to a lower surface of the AF carrier **210** and a side portion being coupled to a side surface of the AF carrier **210**.

The substrate (700) may comprise a lower plate unit **721**. The lower plate unit **721** may be disposed on a lower surface of the AF carrier **210**. The lower plate unit **721** may be coupled to a lower surface of the AF carrier **210**. The lower plate unit **721** may be disposed on a lower surface of the holder member **220**. The lower plate unit **721** may be coupled to a lower surface of the holder member **220**. The lower plate unit **721** may be disposed between the holder member **220** and the preload member **230**. The lower plate unit **721** may be connected to a connecting portion **730**. An OIS-x sensor **530** and an OIS-y sensor **630** may be disposed in the lower plate unit **721**.

The substrate **700** may comprise a side portion. The side portion may be disposed on a side surface of the AF carrier **210**. The side portion may be coupled to a side surface of the AF carrier **210**. Coils **420**, **520**, and **620** may be disposed on a side portion. An AF sensor **430** may be disposed on a side portion. The side portion may be extended upward from the lower plate unit **721**. The side portion may be bent from the lower plate unit **721**.

The AF carrier **210** may comprise a first side surface and a second side surface being disposed opposite to each other, and a third side surface and a fourth side surface being disposed opposite to each other.

The side portion may comprise a first side portion **722**. The first side portion **722** may be bent at the lower plate unit **721**. The first side portion **722** may be disposed on a first side surface of the AF carrier **210**. The AF coil **420** may be disposed on the first side portion **722**. The AF sensor **430** may be disposed on the first side portion **722**.

The side portion may comprise a second side portion **723**. The second side portion **723** may be bent at the lower plate unit **721**. The second side portion **723** may be disposed on a second side surface of the AF carrier **210**. The first side portion **722** and the second side portion **723** may be disposed at opposite sides. The OIS-y coil **620** may be disposed at the second side portion **723**. The OIS-y sensor **630** may be disposed at the lower plate unit **721**. Or, in a modified embodiment, the OIS-y sensor **630** may be disposed at the second side portion **723**. The second side portion **723** may be disposed between the first side portion **722** and the outer portion **710**.

The side portion may comprise a third side portion **724**. The third side portion **724** may be bent at the lower plate unit **721**. The third side portion **724** may be disposed on a third side surface of the AF carrier **210**. The OIS-x coil **520** may be disposed at the third side portion **724**. The OIS-x sensor **530** may be disposed at the lower plate unit **721**. Or, in a modified embodiment, the OIS-x sensor **530** may be disposed at the third side portion **724**.

The substrate **700** may comprise a connecting portion **730**. The connecting portion **730** may be an 'extended portion'. The connecting portion **730** may be a 'leg portion'. The connecting portion **730** may be extended from the outer portion **710**. At least a portion of the connecting portion **730** may move together with the AF carrier **210**. The extended portion may be extended from the outer portion **710**. At least a portion of the extended portion may move together with the AF carrier **210**. At least a portion of the connecting portion **730** may be disposed perpendicular to the optical axis direction. The connecting portion **730** may connect the outer portion **710** and the inner portion **720**. The connecting portion **730** may elastically connect the outer portion **710** and the inner portion **720**. The connecting portion **730** can electrically connect the outer portion **710** and the inner portion **720**. The connecting portion **730** of the substrate **700** can connect the outer portion **710** and the lower plate unit **721**. Or, the connecting portion **730** of the substrate **700** can connect the outer portion **710** and the side portion. That is, the connecting portion **730** of the substrate **700** can connect the outer portion **710** being disposed in the fixed unit **100** and the inner portion **720** being disposed in the AF moving unit **200**. At least a part of the connecting portion **730** can be disposed parallel to the optical axis direction.

The connecting portion **730** may have elasticity. The connecting portion **730** may comprise an elastic member. The connecting portion **730** may connect the outer portion **710** and the inner portion **720** so that the inner portion **720** can move with respect to the outer portion **710**.

The connecting portion **730** of the substrate **700** can be formed integrally with the outer portion **710** of the substrate **700** and the inner portion **720** of the substrate **700**. The connecting portion **730** of the substrate **700** can be overlapped with the inner portion **720** of the substrate **700** in an optical axis direction.

The connecting portion **730** may comprise a bent portion. The bent portion may comprise a bent shape. The bent portion may be bent at least twice. The bent portion may be bent three times. The bent portion may comprise a rounded shape. The bent portion may be coupled to the AF carrier **210**. The bent portion may be disposed in a groove **227** of the AF carrier **210**.

The connecting portion **730** may comprise a first bent portion **731**. The first bent portion **731** may be bent from an outer portion **710** of the substrate **700**. The first bent portion **731** of the substrate **700** may be bent about a first axis that is perpendicular to the optical axis direction and parallel to the outer portion **710** of the substrate **700**.

The connecting portion **730** may comprise a second bent portion **732**. The second bent portion **732** may be bent from the inner portion **720** of the substrate **700**. The second bent portion **732** of the substrate **700** may be bent about a second axis that is parallel to the first axis. At this time, the first axis may be perpendicular to the optical axis direction and parallel to the outer portion **710** of the substrate **700**.

The connecting portion **730** may comprise a third bent portion **733**. The third bent portion **733** may be formed between the first bent portion **731** and the second bent portion **732**. The third bent portion **733** of the substrate **700** may be bent about a third axis that is parallel to the second axis. At this time, the second axis may be a bending central axis of the second bent portion **732**. The first axis of the first bent portion **731**, the second axis of the second bent portion **732**, and the third axis of the third bent portion **733** may be parallel to one another.

The third bent portion **733** may be overlapped with the first bent portion **731** in a direction perpendicular to the outer portion **710** of the substrate **700**. The third bent portion **733** may be overlapped with the second bent portion **732** in an optical axis direction. The third bent portion **733** may be overlapped with the inner portion **720** in an optical axis direction. The third bent portion **733** may be disposed at the same height as the first bent portion **731**. At the initial position, the third bent portion **733** may be disposed at the same height as the first bent portion **731**. As the AF carrier **210** moves, the third bent portion **733** may be disposed at a higher position than the first bent portion **731**. As the AF carrier **733** moves, the third bent portion **733** may be disposed at a lower position than the first bent portion **731**.

In a modified embodiment, the third bent portion **733** may be disposed higher than the first bent portion **731** at the initial position. Or, the third bent portion **733** may be disposed lower than the first bent portion **731** at the initial position.

The curvature radius of the third bent portion **733** may be larger than the curvature radius of the first bent portion **731**. The curvature radius of the third bent portion **733** may be larger than the curvature radius of the second bent portion **732**. The curvature radius of the first bent portion **731** and the curvature radius of the second bent portion **732** may be the same. Or, the curvature radius of the first bent portion **731** may be larger than the curvature radius of the second bent portion **732**. Or, the curvature radius of the first bent portion **731** may be smaller than the curvature radius of the second bent portion **732**.

The connecting portion **730** may comprise a first portion being extended from the outer portion **710**, a second portion being extended from the inner portion **720**, and a third bent portion **733** connecting the first portion and the second portion. The connecting portion **730** may comprise a first bent portion **731** connecting the first portion and the outer portion **710**. The connecting portion **730** may comprise a second bent portion **732** connecting the second portion and the inner portion **720**.

The substrate **700** may comprise a first portion **734**. The connecting portion **730** may comprise a first portion **734**. The first portion **734** of the substrate **700** may connect the second bent portion **732** and the third bent portion **733**. The first portion **734** of the connecting portion **730** of the substrate **700** may be overlapped with the outer portion **710** of the substrate **700** in a direction perpendicular to the outer portion **710** of the substrate **700**.

In a modified embodiment, the connecting portion **730** may comprise a second bent portion **732a**. The second bent portion **732a** of the substrate **700** may be bent about a second axis that is perpendicular to the outer portion **710** of the substrate **700**. The connecting portion **730** may comprise a third bent portion **733a**. The third bent portion **733a** of the substrate **700** may be bent about a third axis that is parallel to the second axis. In this case, the second axis may be a bending central axis of the second bent portion **732a**. The connecting portion **730** may comprise a first portion **734a**. The first portion **734a** may connect the second bent portion **732** and the third bent portion **733**. The first portion **734a** may be disposed on an outer side surface of the AF carrier **210**. The first portion **734a** can be disposed between an adjacent side plate **122** among the plurality of side plates **120** of the cover **120** and the AF carrier **210**.

In a modified embodiment, as illustrated in FIG. 20b, the substrate **700** may comprise a terminal portion **740**. The substrate **700** may comprise an avoidance portion **750**. The terminal portion **740** may comprise two terminals being coupled with the AF coil **420**. The terminal portion **740** may comprise two terminals being coupled with the OIS-x coil **520**. The terminal portion **740** may comprise two terminals being coupled with the OIS-y coil **620**.

One of the two longitudinal lines of the coils **420**, **520**, and **620** may exit from the coupling surface with the substrate **700** and the other may exit from a part far from the substrate **700**. At this time, an avoidance portion **750** may be formed to avoid interference between the longitudinal line exiting from the joint surface with the substrate **700** and the substrate **700**. The avoidance portion **750** may comprise a hole. At least one of the longitudinal lines of the coils **420**, **520**, and **620** may be disposed in the avoidance portion **750**. The avoidance portion **750** may be disposed adjacent to the terminal portion **740**. The avoidance portion **750** may be disposed at an end of the coils **420**, **520**, and **620**. The phenomenon of the coils **420**, **520**, and **620** being lifted at the end may be prevented by the avoidance portion **750**.

In the present embodiment, the substrate **700** may be formed integrally. That is, the outer portion **710**, the inner portion **720**, and the connecting portion **730** may all be formed integrally as one substrate. The substrate **700** has the advantage of being relatively easy to assemble, as it has a structure in which the connecting portion **730** is inserted into the AF carrier **210** and fastened.

The lens driving device **10** may comprise an AF guide ball **810**. The AF guide ball **810** may guide movement of the AF moving unit **200** with respect to the fixed unit **100** in an optical axis direction. The AF guide ball **810** may guide movement of the AF carrier **210** with respect to the base **110** in an optical axis direction. The AF guide ball **810** may be disposed between the fixed unit **100** and the AF moving unit **200**. The AF guide ball **810** may be disposed between the base **110** and the AF carrier **210**. The AF guide ball **810** may be disposed between the housing and the base **110**. The AF guide ball **810** may be disposed between the base **110** and the AF carrier **210** in an x direction. Or, the AF guide ball **810** may be disposed between the base **110** and the AF carrier **210** in a y direction. The AF guide ball **810** may be disposed in a groove of the base **110**. The AF guide ball **810** may be disposed in a groove of the AF carrier **210**. The AF guide ball **810** may be spherical. The AF guide ball **810** may be formed of metal. Grease may be applied to a surface of the AF guide ball **810**.

The base **110** may comprise a first corner region and a second corner region that are disposed diagonally from each other, and a third corner region and a fourth corner region that are disposed diagonally from each other. The AF guide ball **810** may be disposed in a first corner region and a third corner region of the base **110**.

The AF guide ball **810** can move along a rail formed between the base **110** and the AF carrier **210**. The AF guide ball **810** can move along a rail formed in an optical axis direction between the base **110** and the AF carrier **210**. The rail can be formed in an optical axis direction. The rail can comprise a first rail being formed by an inner groove **111-1** of the base **110** and an inner groove **224-1** of the AF carrier **210**, and a second rail being formed by an outer groove **112-1** of the base **110** and an outer groove **224-2** of the AF carrier **210**. A protrusion **132** of a stopper member **130** can be disposed on an upper side of each of the first rail and the second rail. Through this, the phenomenon of the AF guide ball **810** being separated upward from the first rail and the second rail can be prevented.

The AF guide ball **810** may comprise a first ball **816** having a first diameter and a second ball **817** having a second diameter smaller than the first diameter. That is, the diameter of the second ball **817** may be smaller than the diameter of the first ball **816**. The AF guide ball **810** may comprise balls having different diameters.

The length of the protrusion **132** of the stopper member **130** in an optical axis direction (see **L1** of FIG. 6) may be greater than the diameter of the first ball **816** (see **L2** of FIG. 6). The diameter of the first ball **816** may be 85% to 95% of the length of the protrusion **132** of the stopper member **130** in an optical axis direction. The diameter of the first ball **816** may be 83% to 97% of the length of the protrusion **132** of the stopper member **130** in an optical axis direction. At this time, the length of the protrusion **132** of the stopper member **130** in an optical axis direction may be a length protruded from the body portion **131**. The length of the protrusion **132** of the stopper member **130** in an optical axis direction may be a length extended downward from an upper surface of the upper plate **121** of the cover **120**.

The diameter of the second ball **817** (see **L3** in FIG. 6) may be 75% to 85% of the length of the protrusion **132** of the stopper member **130** in an optical axis direction. The diameter of the second ball **817** may be 70% to 90% of the length of the protrusion **132** of the stopper member **130** in an optical axis direction.

The cross-section perpendicular to the optical axis of the protrusion **132** of the stopper member **130** may be a circle having a third diameter. At this time, the third diameter of the protrusion **132** of the stopper member **130** may be smaller than the second diameter of the second ball **817**. The third diameter of the protrusion **132** of the stopper member **130** may be 70% to 80% of the second diameter of the second ball **817**. The third diameter of the protrusion **132** of the stopper member **130** may be 65% to 85% of the second diameter of the second ball **817**.

In a modified embodiment, multiple balls of the AF guide ball **810** may all have the same diameter. At this time, the length of the protrusion **132** of the stopper member **130** in the optical axis direction may be greater than the diameter of the balls.

The AF guide ball **810** may comprise an inner ball **811**. The inner ball **811** may be disposed in the pillar portion **111** of the base **110**. The inner ball **811** may be disposed in the inner groove **111-1** of the base **110**. The inner ball **811** may be disposed in the inner groove **224-1** of the AF carrier **210**. The inner ball **811** may be disposed in the inner groove **224-1** of the AF moving unit **200**. The inner ball **811** may be disposed in the inner groove **111-1** of the base **110** and the inner groove **224-1** of the AF carrier **210**. The inner ball **811** can be disposed between the inner groove **111-1** of the base **110** and the inner groove **224-1** of the AF carrier **210**. The inner ball **811** can be disposed between the AF moving unit **200** and the pillar portion **111** of the fixed unit **100**.

The AF guide ball **810** may comprise an outer ball **812**. The outer ball **812** may be disposed on the outer wall **112** of the base **110**. The outer ball **812** may be disposed in the outer groove **112-1** of the base **110**. The outer ball **812** may be disposed in the outer groove **224-2** of the AF carrier **210**. The outer ball **812** may be disposed in the outer groove **112-1** of the base **110** and the outer groove **224-2** of the AF carrier **210**. The outer ball **812** may be disposed between the outer groove **112-1** of the base **110** and the outer groove **224-2** of the AF carrier **210**. The outer ball **812** can be disposed between the outer groove **112-1** of the fixed unit **100** and the outer groove **224-2** of the AF moving unit **200**. The outer ball **812** can be disposed between the AF moving unit **200** and the outer wall portion **112** of the fixed unit **100**.

The lens driving device **10** may comprise an OIS guide ball **820**. The OIS guide ball **820** may guide movement of the OIS carrier **310** with respect to the AF carrier **210** in a direction perpendicular to the optical axis. The OIS guide ball **820** may be disposed between the AF moving unit **200** and the OIS moving unit **300**. The OIS guide ball **820** may be disposed between the AF carrier **210** and the OIS carrier **310**. The OIS guide ball **820** may be disposed between the AF carrier **210** and the lower side of the OIS carrier **310**. The OIS guide ball **820** may be disposed between the housing and the bobbin. The OIS guide ball **820** may be disposed between the housing and the lower side of the bobbin. The OIS guide ball **820** can be disposed between the AF carrier **210** and the OIS carrier **310** in an optical axis direction.

The OIS guide ball **820** may be disposed in the protruded portion **231** of the preload member **230**. The OIS guide ball **820** may be disposed in the groove **232** of the protruded portion **231**. The OIS guide ball **820** may be disposed in the groove **311** of the OIS moving unit **300**. The OIS guide ball **820** may be disposed between the groove **232** of the protruded portion **231** of the AF moving unit **200** and the groove **311** of the OIS moving unit **300**.

The OIS guide ball **820** may be disposed between the preload member **230** of the AF carrier **210** and the OIS carrier **310**. The OIS guide ball **820** may be pressed between the AF carrier **210** and the OIS carrier **310** by the pressing force of the elastic members **830** and **850**. The preload member **230** may pressurize the OIS guide ball **820** upward during the process of being coupled to the holder member **220**. The preload member **230** may pressurize the OIS guide ball **820** toward the OIS carrier **310** during the process of being coupled to the holder member **220**. At this time, the OIS carrier **310** may pressurize the OIS guide ball **820** toward the preload member **230** by the restoring force of the elastic members **830** and **850**. Accordingly, the OIS guide ball **820** can be pressurized between the preload member **230** and the OIS carrier **310**.

The OIS guide ball **820** can guide the OIS moving unit **300** to move in an x-axis direction and a y-axis direction. The OIS guide ball **820** can guide the movement of the OIS moving unit **300** in an x-axis direction and a y-axis direction. The OIS guide ball **820** can guide the OIS carrier **310** to move in an x-axis direction and a y-axis direction which are perpendicular to the optical axis direction with respect to the AF carrier **210**. That is, the OIS guide ball **820** can guide the OIS carrier **310** to move in an x-axis direction and a y-axis direction. In other words, the OIS guide ball **820** can guide the movement in both the x-axis direction and the y-axis direction. For reference, in the present embodiment in which the ball guiding the x-axis direction and the ball guiding the y-axis direction are provided as a single unit, the size of the lens driving device **10** can be minimized compared to a comparative example in which the ball guiding the x-axis direction and the ball guiding the y-axis direction are provided separately. In particular, the height of the lens driving device **10** in an optical axis direction can be reduced. Through this, the height being protruded from the smartphone, that is, the shoulder height can be minimized.

In a modified embodiment, the OIS guide ball **820** may be provided with separate balls guiding the x-axis driving and guiding the y-axis driving.

The OIS guide ball **820** may comprise a plurality of balls. The OIS guide ball **820** may comprise four balls. The OIS guide ball **820** may comprise first to fourth balls **821**, **822**, **823**, and **824**.

The lens driving device **10** may comprise an elastic member. The elastic member may be formed to support OIS driving. The elastic member may support movement of the OIS moving unit **300**. The elastic member may be formed to pressurize the OIS guide ball **820**. The elastic member may be formed to guide both the OIS-x-axis driving and the OIS-y-axis driving with only the OIS guide ball **820**. The elastic member may comprise a leaf spring. The elastic member may comprise a wire. The elastic member may have elasticity. The elastic member may be formed of metal.

The elastic member can pressurize the OIS guide ball **820** between the AF moving unit **200** and the OIS moving unit **300**. The elastic member can pressurize the OIS moving unit **300** toward the AF moving unit **200**. The elastic member can pressurize the OIS moving unit **300** toward the OIS moving unit **300**. At this time, the elastic member can comprise an elastic member **830** and a wire **850**.

The lens driving device **10** may comprise an elastic member **830**. The elastic member **830** may be an 'upper elastic member'. The elastic member **830** may be an 'upper spring'. The elastic member **830** may be a leaf spring. The elastic member **830** may have elasticity. The elastic member **830** may be disposed in the OIS moving unit **300**. The elastic member **830** may be coupled to the OIS moving unit **300**. The elastic member **830** may be connected to the OIS moving unit **300**. The elastic member **830** may be coupled to an upper surface of the OIS moving unit **300**. The elastic member **830** may be disposed on an upper surface of the OIS moving unit **300**. The elastic member **830** may be disposed on an upper surface of the OIS moving unit **300**. The elastic member **830** may be disposed on an upper portion of the OIS carrier **310**. The elastic member **830** may be disposed on the OIS carrier **310**. The elastic member **830** may be disposed on an upper portion of the OIS carrier **310**. The elastic member **830** may be disposed above the OIS carrier **310**. The elastic member **830** may be disposed perpendicular to the optical axis.

The elastic member **830** may comprise an inner portion **831**. The inner portion **831** may be coupled with the OIS moving unit **300**. The elastic member **830** may comprise an outer portion **832**. The outer portion **832** may be coupled with the wire **850**. The elastic member **830** may comprise a connecting portion **833**. The connecting portion **833** may connect the inner portion **831** and the outer portion **832**. The connecting portion **833** may elastically connect the inner portion **831** and the outer portion **832**. The connecting portion **833** may comprise elasticity. The connecting portion **833** may be an elastic portion. The connecting portion **833** may be a 'leg portion'.

The inner portion **831** of the elastic member **830** may be disposed higher than the outer portion **832**. The inner portion **831** of the elastic member **830** may be located higher than the outer portion **832**. The inner portion **831** of the elastic member **830** may be disposed higher than the outer portion **832** by a first distance. The reason why the inner portion **831** of the elastic member **830** is disposed higher than the outer portion **832** may be due to the pressing force of the preload member **230**. Through this structure, the OIS guide ball **820** may be maintained in contact with the preload member **230** of the AF carrier **210** and the OIS carrier **310**.

The OIS carrier **310** may comprise a first region being coupled with the elastic member **830**. The wire **850** may comprise a second region being coupled with the elastic member **830**. The first region of the OIS carrier **310** may be located above the second region of the wire **850**. The first region of the OIS carrier **310** may be located above the second region of the wire **850** by 0.2 to 0.6 mm. The first region of the OIS carrier **310** may be located above the second region of the wire **850** by 0.3 to 0.5 mm.

The lens driving device **10** may comprise a wire **850**. The wire **850** may be a 'side portion elastic member'. The wire **850** may be a wire. The wire **850** may be a wire spring. The wire **850** may be a suspension wire. The wire **850** may have elasticity. The wire **850** may connect the elastic member **830** and the AF carrier **210**. The wire **850** may connect the elastic member **830** and a lower side of the AF carrier **210**. The wire **850** may connect the elastic member **830** and the housing. The wire **850** may connect the elastic member **830** and a lower side of the housing. The wire **850** may elastically connect the elastic member **830** and the AF carrier **210**. The wire **850** can connect the elastic member **830** and the horizontal reinforcing member **225** of the AF carrier **210**. The wire **850** can elastically connect the elastic member **830** and the horizontal reinforcing member **225** of the AF carrier **210**. The wire **850** can be disposed parallel to the optical axis. The wire **850** can be disposed in an optical axis direction.

The upper portion of the wire **850** can be coupled with the elastic member **830**. The first portion of the wire **850** can be coupled with the elastic member **830**. The lower portion of the wire **850** can be coupled with the AF moving unit **200**. The lower portion of the wire **850** can be coupled with a lower surface of the AF moving unit **200**. The second portion of the wire **850** can be coupled with the AF moving unit **200**. The lower portion of the wire **850** can be coupled with the AF carrier **210**. The lower portion of the wire **850** can be coupled with the holder member **220**. The lower portion of the wire **850** can be coupled with the horizontal reinforcing member **225**. The lower portion of the wire **850** can be soldered with the horizontal reinforcing member **225**. The lower portion of the wire **850** can be welded with the horizontal reinforcing member **225**. The lower end of the wire **850** can be coupled to the horizontal reinforcing member **225** by a conductive epoxy. The lower end of the wire **850** can be coupled to the horizontal reinforcing member **225** by a conductive material. The lower end of the wire **850** can be directly coupled to the horizontal reinforcing member **225**. The wire **850** can connect the elastic member **830** and the AF moving unit **200**. The wire **850** can connect the elastic member **830** and the AF carrier **210**. The wire **850** can connect the elastic member **830** and the holder member **220**. The wire **850** can connect the elastic member **830** and the horizontal reinforcing member **225**.

The wire **850** may comprise a plurality of wires. The wire **850** may comprise four wires. The wire **850** may comprise first to fourth wires **851**, **852**, **853**, and **854**.

The lens driving device **10** may comprise a pressurizing member. The pressurizing member may be an 'AF guide ball pressurizing member'. The pressurizing member may pressurize the AF guide ball **810**. The pressurizing member may be formed to pressurize the ball. The AF guide ball **810** pressurized by the pressurizing member may be sandwiched between the fixed unit **100** and the AF moving unit **200**. The AF guide ball **810** pressurized by the pressurizing member may be sandwiched between the base **110** and the AF carrier **210**. The pressurizing member may allow the AF guide ball **810** to be maintained in contact with the fixed unit **100** and the AF moving unit **200**. The pressurizing member may allow the AF guide ball **810** to be maintained in contact with the base **110** and the AF carrier **210**.

The lens driving device **10** may comprise a plate member **910**. The pressing member may comprise the plate member **910**. The plate member **910** may be disposed on the AF guide ball **810**. The plate member **910** may be in contact with the AF guide ball **810**. The plate member **910** may be disposed on the elastic member **920**. The plate member **910** may be disposed on the base **110**. The plate member **910** may be disposed between the elastic member **920** and the AF guide ball **810**. The plate member **910** may press the AF guide ball **810** toward the AF carrier **210** by the elastic member **920**. The plate member **910** may be disposed between the AF guide ball **810** and the fixed unit **100**. The plate member **910** can be disposed between the inner ball **811** and the pillar portion **111** of the fixed unit **100**.

The lens driving device **10** may comprise an elastic member **920**. The pressing member may comprise an elastic member **920**. The elastic member **920** may be a spring. The elastic member **920** may be a tapered spring. The elastic member **920** may be disposed in the fixed unit **100**. The elastic member **920** may press the AF guide ball **810** toward the AF moving unit **200**. The elastic member **920** may press the plate member **910** toward the AF guide ball **810**. The elastic member **920** may be disposed between the plate member **910** and the fixed unit **100**. The elastic member **920** may push the plate member **910** against the fixed unit **100**. The elastic member **920** can press the plate member **910** in the opposite direction to the fixed unit **100**. The elastic member **920** can be disposed between the plate member **910** and the pillar portion **111** of the fixed unit **100**. The elastic member **920** can be disposed in the inner groove **111-1** of the fixed unit **100**. The elastic member **920** can press the AF guide ball **810** between the fixed unit **100** and the AF moving unit **200**. The elastic member **920** can press the AF guide ball **810** to be in close contact with the base **110** and the AF carrier **210**.

In a modified embodiment, the elastic member **920** may be disposed in the AF moving unit **200**. At this time, the elastic member **920** may press the AF guide ball **810** toward the fixed unit **100**. The elastic member **920** may be disposed in one of the fixed unit **100** and the AF moving unit **200** to press the AF guide ball **810** toward the other one of the fixed unit **100** and the AF moving unit **200**. The elastic member **920** may press the plate member **910**. The elastic member **920** may be disposed between the plate member **910** and the base **110**. The elastic member **920** may be disposed between the AF guide ball **810** and the base **110**. The elastic member **920** may be disposed in the base **110**. The elastic member **920** can be disposed in the inner groove **111-1** of the base **110**. The elastic member **920** can press the AF guide ball **810** toward the AF carrier **210**. Through this, the AF guide ball **810** can be maintained in contact with the plate member **910** and the AF carrier **210**.

The elastic member **920** may comprise a bent portion. The bent portion may comprise a bent shape. The bent portion may comprise a plurality of bent portions. The bent portion may comprise three bent portions. The elastic member **920** may be bent at least three times. The elastic member **920** may comprise an upper bent portion **921**. The elastic member **920** may comprise a lower bent portion **922**. The elastic member **920** may comprise a connecting bent portion **923**. The connecting bent portion **923** may be disposed between the upper bent portion **921** and the lower bent portion **922**. The upper bent portion **921** may form an obtuse angle. The lower bent portion **922** may form an obtuse angle. The connecting bent portion **923** may form an obtuse angle. The upper bent portion **921** may be disposed on the fixed unit **100**. The lower bent portion **922** can be disposed on the fixed unit **100**. The connecting bent portion **923** can be disposed on the plate member **910**. Through this structure, the elastic member **920** can push the plate member **910** against the fixed unit **100**. The connecting bent portion **923** can contact the plate member **910** and press the plate member **910** toward the AF guide ball **810**.

The height of the point where the elastic member **920** presses the plate member **910** may be lower than the height of the ball being disposed lower between the inner upper end ball **811-1** and the outer upper end ball **812-1** and higher than the height of the ball being disposed higher between the inner lower end ball **811-2** and the outer lower end ball **812-2**. More specifically, as shown in (a) of FIG. 44, when the AF moving unit **200** moves upward, the height (b) of the point where the elastic member **920** presses the plate member **910** may be higher than the height (a) of the ball being disposed higher between the inner lower end ball **422** and the outer lower end ball **412**. A gap (c) may exist in the height between the two points. In addition, as in (b) of FIG. 44, when the AF moving unit **200** moves downward, the height (e) of the point where the elastic member **920** presses the plate member **910** may be lower than the height (d) of the ball being disposed lower among the inner upper end ball **421** and the outer upper end ball **411.** A gap (f) may exist between the two points. Through this, the generation of a moment being generated as the elastic member **920** presses the plate member **910** may be prevented or minimized. In other words, the phenomenon of the plate member **910** tilting or being detached may be prevented.

The lens driving device **10** may comprise a reinforcing member **930.** The reinforcing member **930** may be disposed in the base **110.** The reinforcing member **930** may be disposed to reinforce the strength of the base **110.** The reinforcing member **930** may prevent damage to the base **110.** The reinforcing member **930** may prevent damage to the pillar portion **111** of the base **110.** The reinforcing member **930** may prevent damage to the outer wall portion **112** of the base **110.** The reinforcing member **930** may have elasticity. The reinforcing member **930** may be formed of metal. The reinforcing member **930** may comprise a shape that is bent at least twice. The reinforcing member **930** may be formed in a '⊂' shape when viewed from above. The reinforcing member **930** can be opened inwardly.

The reinforcing member **930** may comprise an inner portion **931.** The inner portion **931** may be disposed on an opposite surface of the inner groove **111-1** of the pillar portion **111** of the fixed unit **100.** The reinforcing member **930** may comprise an outer portion **932.** The outer portion **932** may be disposed on an opposite surface of the outer groove **112-1** of the outer wall portion **112** of the fixed unit **100.** The reinforcing member **930** may comprise a connecting portion **933.** The connecting portion **933** may connect the inner portion **931** and the outer portion **932.**

When viewed from above, the first point **P1** where the imaginary straight line connecting the center of the first ball **821** and the center of the second ball **822** and the imaginary straight line connecting the center of the third ball **823** and the center of the fourth ball **824** intersect may not coincide with the optical axis **OA.** At this time, the first ball **821** and the second ball **822** may be disposed diagonally from each other. The third ball **823** and the fourth ball **824** may be disposed diagonally from each other.

When viewed from above, a second point **P2** where an imaginary straight line passing through the center of the OIS-x magnet **510** and being perpendicular to an outer side surface of the OIS-x magnet **510** intersects an imaginary straight line passing through the center of the OIS-y magnet **610** and being perpendicular to an outer side surface of the OIS-y magnet **610** may not coincide with the optical axis **OA**. The outer side surface of the OIS-x magnet **510** may face the OIS-x coil **520**. The outer side surface of the OIS-y magnet **610** may face the OIS-y coil **620**.

The first wire **851** and the second wire **852** may be disposed diagonally relative to each other. The third wire **853** and the fourth wire **854** may be disposed diagonally relative to each other.

When viewed from above, the third point **P3** where the imaginary straight line connecting the center of the first wire **851** and the center of the second wire **852** and the imaginary straight line connecting the center of the third wire **853** and the center of the fourth wire **854** intersect may not coincide with the optical axis **OA**. At this time, the first wire **851** and the second wire **852** may be disposed diagonally relative to each other. The third wire **853** and the fourth wire **854** may be disposed diagonally relative to each other.

When viewed from above, a point where an imaginary straight line connecting the center of the first ball **821** and the center of the second ball **822** and an imaginary straight line connecting the center of the third ball **823** and the center of the fourth ball **824** intersect may be a first point **P1**. When viewed from above, a point where an imaginary straight line passing through the center of the OIS-x magnet **510** and being orthogonal to an outer side surface of the OIS-x magnet **510** and an imaginary straight line passing through the center of the OIS-y magnet **610** and being orthogonal to an outer side surface of the OIS-y magnet **610** intersect may be a second point **P2**. When viewed from above, the point where an imaginary straight line connecting the center of the first wire **851** and the center of the second wire **852** and an imaginary straight line connecting the center of the third wire **853** and the center of the fourth wire **854** intersect may be a third point **P3**.

When viewed from above, the first point **P1** may not coincide with the second point **P2**. When viewed from above, the first point **P1** may not coincide with the third point **P3**. When viewed from above, the second point **P2** may coincide with the third point **P3**. The second point **P2** and the third point **P3** may be disposed at corresponding positions. The second point **P2** and the third point **P3** may be disposed at the same position. At least a portion of the second point **P2** may be disposed to be overlapped with at least a portion of the third point **P3**.

When viewed from above, the center of the base **110** may not coincide with the first point **P1**. When viewed from above, the center of the base **110** may not coincide with the second point **P2**. When viewed from above, the center of the base **110** may not coincide with the third point **P3**. When viewed from above, the center of the base **110** may not coincide with the optical axis **OA**. At this time, the center of the base **110** may be the center of the actuator. The center of the base **110** may be the center with respect to the peripheral size of the base **110**. Or, the center of the base **110** may be the center of the hollow of the base **110**.

The base **110** may comprise a first side surface and a second side surface being disposed opposite to each other, and a third side surface and a fourth side surface being disposed opposite to each other. When viewed from above, a point where an imaginary straight line being spaced apart at the same distance as the first side surface of the base **110** and the second side surface of the base **110** and an imaginary straight line being spaced apart at the same distance as the third side surface of the base **110** and the fourth side surface of the base **110** intersect may coincide with a center of the base **110**. In addition, a straight line where an imaginary plane being spaced apart at the same distance as the first side surface of the base **110** and the second side surface of the base **110** intersect and an imaginary plane being spaced apart at the same distance as the third side surface of the base **110** and the fourth side surface of the base **110** intersect may coincide with a central axis of the base **110**.

The center of the cover **120** may coincide with the center of the base **110**. When viewed from above, the center of the cover **120** may not coincide with the first point **P1**. When viewed from above, the center of the cover **120** may not coincide with the second point **P2**. When viewed from above, the center of the cover **120** may not coincide with the third point **P3**. When viewed from above, the center of the cover **120** may not coincide with the optical axis **OA**. At this time, the center of the cover **120** may be the center of the actuator.

The cover **120** may comprise a first side plate and a second side plate being disposed opposite to each other, and a third side plate and a fourth side plate being disposed opposite to each other. When viewed from above, a point where an imaginary straight line being spaced apart by the same distance as the first side plate of the cover **120** and the second side plate of the cover **120** and an imaginary straight line being spaced apart by the same distance as the third side plate of the cover **120** and the fourth side plate of the cover **120** meet may coincide with the center of the cover **120**.

When viewed from above, the second point **P2** is disposed at a position corresponding to the optical axis **OA** in a y-axis direction and can be spaced apart in an x-axis direction.

When viewed from above, the fourth point **P4** may be disposed at a position corresponding to the second point **P2** in an x-axis direction and spaced apart in a y-axis direction. When viewed from above, the fourth point **P4** may be disposed at a position corresponding to the third point **P3** in an x-axis direction and spaced apart in a y-axis direction. The fourth point **P4** may be the central axis of the outer periphery of the lens driving device **10**.

The OIS carrier **310** may comprise a hole **313** penetrating the OIS carrier **310** in an optical axis direction. The central axis of the hole **313** of the OIS carrier **310** may coincide with an optical axis **OA**.

As illustrated in FIG. 27, when viewed from above, with respect to the reference line, the y-axis distance **A1** of the center of the ball is smaller than the y-axis distance **B1** of the optical axis, smaller than the y-axis distance **C1** of the center of the wire and the y-axis distance **C1** of the center of the magnet, and may be smaller than the y-axis distance **D1** of the center of the actuator. The y-axis distance **D1** of the center of the actuator may be half of the total y-axis distance **E1** of the actuator.

When viewed from above, with respect to the reference line, the y-axis distance **B1** of the optical axis is smaller than the y-axis distance **C1** of the wire center and the y-axis distance **C1** of the magnet center, and may be smaller than the y-axis distance **D1** of the actuator center.

When viewed from above, with respect to the reference line, the y-axis distance **C1** from the center of the wire can be equal to the y-axis distance **C1** from the center of the magnet.

When viewed from above, with respect to the reference line, the y-axis distance **C1** from the center of the wire and the y-axis distance **C1** from the center of the magnet may be smaller than the y-axis distance **D1** from the center of the actuator.

As shown in Figure 27, when viewed from above, with respect to the reference line, the x-axis distance **B2** of the optical axis is less than the x-axis distance **A2** of the ball center, less than the x-axis distance **C2** of the wire center and the x-axis distance **C2** of the magnet center, and may be less than the x-axis distance **D2** of the actuator center. The x-axis distance **D2** of the actuator center may be half of the total x-axis distance **E2** of the actuator.

When viewed from above, with respect to the reference line, the x-axis distance **A2** of the ball center is smaller than the x-axis distance **C2** of the wire center and the x-axis distance **C2** of the magnet center, and may be smaller than the x-axis distance **D2** of the actuator center.

When viewed from above, with respect to the reference line, the x-axis distance **C2** from the center of the wire may be equal to the x-axis distance **C2** from the center of the magnet.

When viewed from above, with respect to the reference line, the x-axis distance **C2** from the center of the wire and the x-axis distance **C2** from the center of the magnet may be smaller than the x-axis distance **D2** from the center of the actuator.

Hereinafter, the auto focus (AF) driving of the lens driving device according to the present embodiment is described with reference to the drawings.

FIGS. 40 to 42 are diagrams for explaining the auto focus driving of the lens driving device according to the present embodiment. FIG. 40 is a cross-sectional view illustrating the appearance of the moving unit in an initial state in which no current is applied to the AF coil. FIG. 41 is a cross-sectional view illustrating the appearance in which the moving unit moved upward in the optical axis direction when a forward current is applied to the AF coil. FIG. 42 is a cross-sectional view illustrating the appearance in which the moving unit moved downward in the optical axis direction when a reverse current is applied to the AF coil.

As illustrated in FIG. 40, the moving unit may be disposed at a position spaced apart from both the upper plate **121** of the cover **120** and the base **110** in an initial position where no current is applied to the AF coil **420**. At this time, the moving unit may be an AF moving unit **200**. In addition, the moving unit may comprise an AF moving unit **200** and an OIS moving unit **300**.

When a forward current is applied to the AF coil **420**, the AF coil **420** can move upward in an optical axis direction due to the electromagnetic interaction between the AF coil **420** and the AF magnet **410** (see **A** of FIG. 41). At this time, the AF carrier **210** can move upward in an optical axis direction together with the AF coil **420**. Furthermore, the OIS carrier **310** and the lens can move upward in an optical axis direction together with the AF carrier **210**. Accordingly, the distance between the lens and the image sensor **60** can be changed, and the focus of the image being formed on the image sensor **60** through the lens can be adjusted.

When a reverse current is applied to the AF coil **420**, the AF coil **420** can move downward in an optical axis direction due to the electromagnetic interaction between the AF coil **420** and the AF magnet **410** (see **B** of FIG. 42). At this time, the AF carrier **210** can move downward in an optical axis direction together with the AF coil **420**. Furthermore, the OIS carrier **310** and the lens can move downward in an optical axis direction together with the AF carrier **210**. Accordingly, the distance between the lens and the image sensor **60** can be changed, and the focus of the image formed on the image sensor **60** through the lens can be adjusted.

Meanwhile, during the movement process of the AF coil **420**, the AF sensor **460** moves together with the AF coil **420** and detects the strength of the magnetic field of the AF magnet **410** to detect the amount of movement or position of the lens in an optical axis direction. The amount of movement or position of the lens in an optical axis direction detected by the AF sensor **430** can be used for auto focus feedback control.

Hereinafter, the optical image stabilization (OIS) driving of the lens driving device according to the present embodiment is described with reference to the drawings.

FIGS. 43 to 45 are drawings for explaining the hand shake correction driving of the lens driving device according to the present embodiment. FIG. 43 is a cross-sectional view illustrating the appearance of the OIS moving unit in an initial state in which no current is applied to the OIS-x coil and the OIS-y coil. FIG. 44 is a cross-sectional view illustrating the appearance in which the OIS moving unit moves in an x-axis direction perpendicular to the optical axis when current is applied to the OIS-x coil. FIG. 45 is a cross-sectional view illustrating the appearance in which the OIS moving unit moves in a y-axis direction perpendicular to both the optical axis and the x-axis direction when current is applied to the OIS-y coil.

As illustrated in FIG. 43, the moving unit can be disposed in the initial position without current being applied to the OIS-x coil **520** and the OIS-y coil **620**. At this time, the moving unit can be the OIS moving unit **300**.

When a current is applied to the OIS-x coil **520**, the OIS-x magnet **510** can move in an x-axis direction perpendicular to the optical axis due to the electromagnetic interaction between the OIS-x coil **520** and the OIS-x magnet **510** (see **A** of FIG. 44). At this time, the OIS carrier **310** can move in an x-axis direction together with the OIS-x magnet **510**. Furthermore, the lens can move in an x-axis direction together with the OIS carrier **310**. In more detail, when a forward current is applied to the OIS-x coil **520**, the OIS-x magnet **510**, the OIS carrier **310**, and the lens can move in one direction along an x-axis. In addition, when a reverse current is applied to the OIS-x coil **520**, the OIS-x magnet **510**, the OIS carrier **310**, and the lens can move in the other direction along an x-axis.

When a current is applied to the OIS-y coil **620**, the OIS-y magnet **610** can move in a y-axis direction perpendicular to the optical axis due to the electromagnetic interaction between the OIS-y coil **620** and the OIS-y magnet **610** (see **B** of FIG. 45). At this time, the OIS carrier **310** can move in a y-axis direction together with the OIS-y magnet **610**. Furthermore, the lens can move in a y-axis direction together with the OIS carrier **310**. In more detail, when a forward current is applied to the OIS-y coil **620**, the OIS-y magnet **610**, the OIS carrier **310**, and the lens can move in one direction on a y-axis. In addition, when a reverse current is applied to the OIS-y coil **620**, the OIS-y magnet **610**, the OIS carrier **310**, and the lens can move in the other direction on a y-axis.

Meanwhile, the OIS-x sensor **530** can detect the amount of movement or position of the OIS-x magnet **510** by detecting the strength of the magnetic field of the OIS-x magnet **510**. The amount of movement or position detected by the OIS-x sensor **530** can be used for x-axis direction hand shake correction feedback control. The OIS-y sensor **630** can detect the amount of movement or position of the OIS-y magnet **610** by detecting the strength of the magnetic field of the OIS-y magnet **610**. The amount of movement or position detected by the OIS-y sensor **630** can be used for y-axis direction hand shake correction feedback control.

Hereinafter, a camera device according to the present embodiment is described with reference to the drawings.

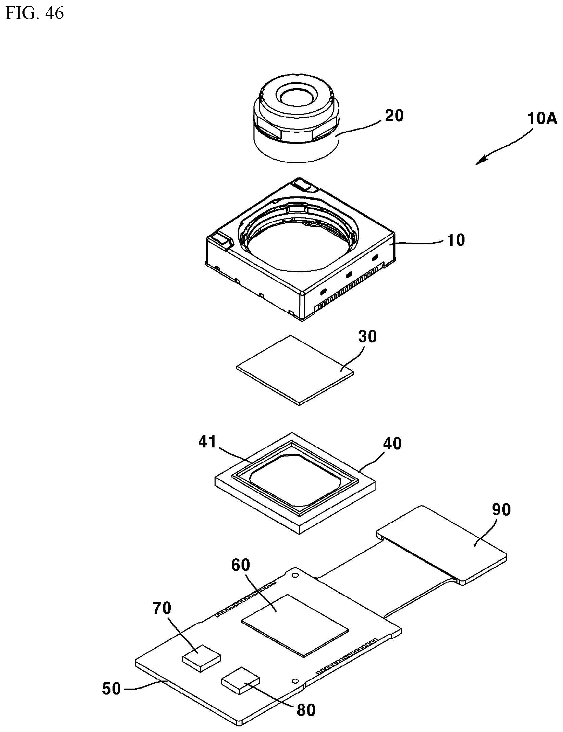

FIG. 46 is an exploded perspective view of a camera device according to the present embodiment.

The camera device **10A** may comprise a camera module.

The camera device **10A** may comprise a lens module **20**. The lens module **20** may comprise at least one lens. The lens may be disposed at a position corresponding to the image sensor **60**. The lens module **20** may comprise a lens and a barrel. The lens module **20** may be coupled to an OIS carrier **310** of the lens driving device **10**. The lens module **20** may be coupled to the OIS carrier **310** by screw coupling and/or adhesive. The lens module **20** may be moved integrally with the OIS carrier **310**.

The camera device **10A** may comprise a filter **30**. The filter **30** may block light of a specific frequency band from passing through the lens module **20** from being incident on the image sensor **60**. The filter **30** may be disposed parallel to an x-y plane. The filter **30** may be disposed between the lens module **20** and the image sensor **60**. The filter **30** may be disposed in the sensor base **40**. In a modified embodiment, the filter **30** may be disposed in the base **110**. The filter **30** may comprise an infrared filter. The infrared filter may block light in an infrared region from being incident on the image sensor **60**.

The camera device **10A** may comprise a sensor base **40**. The sensor base **40** may be disposed between the lens driving device **10** and the printed circuit board **50**. The sensor base **40** may comprise a protruded portion **41** in which a filter **30** is disposed. An opening may be formed in a portion of the sensor base **40** in which the filter **30** is disposed so that light passing through the filter **30** may be incident on the image sensor **60**. The adhesive member may couple or attach the base **110** of the lens driving device **10** to the sensor base **40**. The adhesive member may additionally serve to prevent foreign substances from being introduced into the interior of the lens driving device **10**. The adhesive member may comprise at least one of epoxy, a thermosetting adhesive, and an ultraviolet-curable adhesive. The sensor base **40** may be formed to have a smaller size than the lens driving device **10** and may be disposed inside the lens driving device **10**. That is, both the lens driving device **10** and the sensor base **40** can be disposed directly on the printed circuit board **50**, and the sensor base **40** can be disposed inside the lens driving device **10**.

The camera device **10A** may comprise a printed circuit board (PCB) **50**. The printed circuit board **50** may be a substrate or a circuit board. A lens driving device **10** may be disposed on the printed circuit board **50**. A sensor base **40** may be disposed between the printed circuit board **50** and the lens driving device **10**. The printed circuit board **50** may be electrically connected to the lens driving device **10**. An image sensor **60** may be disposed on the printed circuit board **50**. Various circuits, elements, control units, and the like may be provided on the printed circuit board **50** to convert an image formed on the image sensor **60** into an electrical signal and transmit it to an external device.

The camera device **10A** may comprise an image sensor **60**. The image sensor **60** may be configured such that light passing through a lens and a filter **30** is incident thereon to an image. The image sensor **60** may be mounted on a printed circuit board **50**. The image sensor **60** may be electrically connected to the printed circuit board **50**. For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light irradiated onto the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70**. The motion sensor **70** may be mounted on a printed circuit board **50**. The motion sensor **70** may be electrically connected to a control unit **80** through a circuit pattern provided on the printed circuit board **50**. The motion sensor **70** may output rotational angular velocity information due to the movement of the camera device **10A**. The motion sensor 70 may comprise a two-axis or three-axis gyro sensor, or an angular velocity sensor.

The camera device **10A** may comprise a control unit **80**. The control unit **80** may be disposed on a printed circuit board **50**. The control unit **80** may be electrically connected to a coil **330** of a lens driving device **10**. The control unit **80** may individually control the direction, intensity, amplitude, and the like of the current being supplied to the coil **330**. The control unit **80** may control the lens driving device **10** to perform an auto focus function and/or a hand shake correction function. Furthermore, the control unit **80** may perform auto focus feedback control and/or hand shake correction feedback control for the lens driving device **10**.

The camera device **10A** may comprise a connector **90**. The connector **90** may be electrically connected to a printed circuit board **50**. The connector **90** may comprise a port for electrically connecting to an external device.

Hereinafter, an optical apparatus according to the present embodiment is described with reference to drawings.

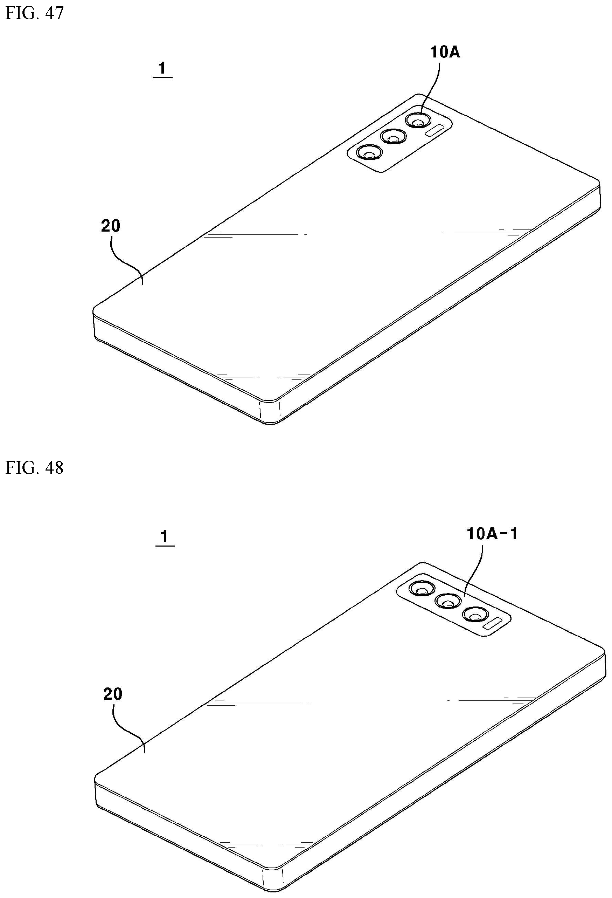

FIG. 47 is a perspective view of an optical apparatus according to the present embodiment; and FIG. 48 is a perspective view of an optical apparatus according to a modified embodiment.

The optical apparatus **1** may comprise at least one among a mobile phone, a cellular phone, a portable terminal, a mobile terminal, a smart phone, a smart pad, a portable smart device, a digital camera, a laptop computer, a digital broadcasting terminal, a Personal Digital Assistants (PDA), a portable multimedia player (PMP), and a navigation device. The optical apparatus **1** may comprise any device for photographing videos or pictures.

The optical apparatus **1** may comprise a main body **20**. The optical apparatus **1** may comprise a camera device **10A**. The camera device **10A** may be disposed in the main body **20**. The camera device **10A** may capture a subject. The optical apparatus **1** may comprise a display. The display may be disposed in the main body **20**. The display may output one or more of an image and a video captured by the camera device **10A**. The display may be disposed on a first surface of the main body **20**. The camera device **10A** may be disposed on one or more of the first surface of the main body **20** and the second surface opposite to the first surface. As illustrated in FIG. 47, in the camera device **10A**, a triple camera may be disposed in a vertical direction. As illustrated in FIG. 48, in the camera device **10A**, a triple camera may be disposed in a horizontal direction.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a base;
an AF carrier disposed on the base;
an OIS carrier disposed in the AF carrier;
a first driving unit configured to move the AF carrier in an optical axis direction;
a second driving unit configured to move the OIS carrier in a direction perpendicular to the optical axis direction; and
a substrate comprising an outer portion disposed on the base, an inner portion disposed on the AF carrier, and a connecting portion connecting the outer portion and the inner portion,
wherein the connecting portion of the substrate is formed integrally with the outer portion of the substrate and the inner portion of the substrate, and
wherein the second driving unit comprises a first coil disposed on the substrate, and a first magnet disposed on the OIS carrier.

2. The lens driving device of claim 1, wherein the first driving unit comprises a third coil disposed on the substrate and a third magnet disposed on the base.

3. The lens driving device of claim 1, wherein the second driving unit comprises a second coil disposed on the substrate and a second magnet disposed on the OIS carrier.

4. The lens driving device of claim 3, wherein the first driving unit comprises a third coil disposed on the substrate and a third magnet disposed on the base.

5. The lens driving device of claim 1, wherein the connecting portion of the substrate may comprise a first bent portion bent from the outer portion of the substrate, a second bent portion bent from the inner portion of the substrate, and a third bent portion formed between the first bent portion and the second bent portion.

6. The lens driving device of claim 5, wherein the first bent portion of the substrate is bent about a first axis,
wherein the second bent portion of the substrate is bent about a second axis,
wherein the third bent portion of the substrate is bent about a third axis, and
wherein the first axis, the second axis, and the third axis are parallel to one another.

7. The lens driving device of claim 5, wherein a radius of curvature of the third bent portion is greater than a radius of curvature of the first bent portion, and
wherein the radius of curvature of the third bent portion is greater than a radius of curvature of the second bent portion.

8. The lens driving device of claim 5, wherein the third bent portion is disposed at the same height as the first bent portion.

9. The lens driving device of claim 5, wherein the third bent portion is disposed at a higher position than the first bent portion as the AF carrier moves.

10. The lens driving device of claim 5, wherein the third bent portion is disposed at a lower position than the first bent portion as the AF carrier moves.
